# EUROPEAN PATENT SPECIFICATION

(11) **EP 3 972 078 B1**
(45) Date of publication and mention of the grant of the patent: **25.10.2023**
(21) Application number: 20879024.6
(22) Date of filing: 10.06.2020
(51) Int. Cl.: H02J 7/02, H02J 7/00, H02M 7/797, H02M 3/335, B60R 16/033, H02J 3/32, H02J 1/08, B60L 53/20, H02J 7/34, H02M 1/00, H02M 1/42, H02M 3/00, H02M 3/155, B60L 53/22, B60L 58/20, H02M 1/10

(54) **VEHICLE-MOUNTED CHARGING AND DISCHARGING SYSTEM AND CONTROL METHOD**
FAHRZEUGMONTIERTES LADE- UND ENTLADESYSTEM UND STEUERUNGSVERFAHREN
SYSTÈME DE CHARGE ET DE DÉCHARGE MONTÉ SUR VÉHICULE ET PROCÉDÉ DE COMMANDE

(30) Priority: 24.10.2019 CN 201911018627
(43) Date of publication of application: 23.03.2022
(73) Proprietor: Huawei Digital Power Technologies Co., Ltd., Shenzhen, Guangdong 518043 (CN)
(72) Inventor: LIU, Weiping, Shenzhen, Guangdong 518129 (CN); CUI, Zhaoxue, Shenzhen, Guangdong 518129 (CN); LIANG, Yongtao, Shenzhen, Guangdong 518129 (CN)
(74) Representative: Thun, Clemens
(86) International application number: PCT/CN2020/095268
(87) International publication number: WO 2021/077763

(56) References cited:
- WO-A1-2019/199964
- CN-A- 106 208 641
- CN-A- 107 359 682
- CN-A- 107 662 498
- CN-A- 110 707 792
- KR-A- 20130 016 874
- US-A1- 2008 094 859
- US-A1- 2014 103 860

## Description

### TECHNICAL FIELD

This application relates to the field of electric vehicle technologies, and specifically, to an in-vehicle charge and discharge system and control method.

### BACKGROUND

With constantly heightened environmental awareness of people, electric vehicles are now favored by a growing quantity of consumers. Research and development for electric vehicles have gradually become the focus of the automotive industry. With constant development of electric vehicles, at present, increasingly high requirements are put forward for an in-vehicle charge and discharge system, to expect to reduce a size of the in-vehicle charge and discharge system, and reduce production costs of the in-vehicle charge and discharge system.

The WO 2019/199964 A1 discloses a vehicle on-board charger for bi-directional charging of low/high voltage batteries. Hereby a compact light-weight on-board three-port power electronic system is described built in various configurations of triple-active-bridge-derived topologies, including modular implementations, with control strategies capable of bi-directional power transfer among the three ports, including simultaneous charging of HV and LV batteries from a single phase or three phase power grid with minimized reactive power and active circulating current, with ensured soft-switching for MOSFET devices, and with enhanced synchronous rectification and reduced power losses.

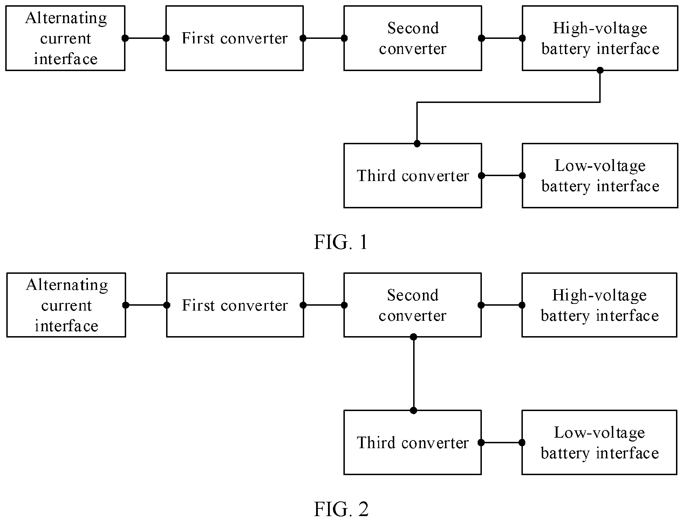

Currently, relatively common in-vehicle charge and discharge systems include two structures shown in FIG. 1 and FIG. 2. In the in-vehicle charge and discharge system shown in FIG. 1, an alternating current interface, a first converter, a second converter, a high-voltage battery interface, a third converter, and a low-voltage battery interface are sequentially connected in series. The first converter may work in a power factor correction (power factor correction, PFC) mode (AC/DC mode) or an inverting mode (DC/AC mode), and both the second converter and the third converter are isolating DCDC converters However, in the in-vehicle charge and discharge system shown in FIG. 1, the converters are not multiplexed effectively, and therefore, the system has disadvantages such as high costs and a large size.

In the in-vehicle charge and discharge system shown in FIG. 2, the alternating current interface is connected to a first port of the second converter by using the first converter, the high-voltage battery interface is connected to a second port of the second converter, and the low-voltage battery interface is connected to a third port of the second converter by using the third converter. The first converter may work in the PFC mode (AC/DC mode) or the inverting mode (DC/AC mode), the second converter is an isolating DCDC converter with three ports, and the third converter is an isolating DCDC converter. The in-vehicle charge and discharge system shown in FIG. 2 uses the three-port second converter, so that the size and production costs of the in-vehicle charge and discharge system can be reduced to some extent. However, multi-output coupling of the converter deteriorates a cross adjustment rate of the in-vehicle charge and discharge system. In many cases, it is difficult to implement a soft switch, affecting both conversion efficiency and reliability of the system.

In conclusion, how to reduce the size of the in-vehicle charge and discharge system and reduce the production costs of the in-vehicle charge and discharge system when working performance of the in-vehicle charge and discharge system is ensured has become a problem that urgently needs to be resolved at present.

### SUMMARY

Embodiments of this application provide an in-vehicle charge and discharge system and control method, to reduce a size of the in-vehicle charge and discharge system and reduce production costs of the in-vehicle charge and discharge system when working performance of the in-vehicle charge and discharge system is ensured.

In view of this, a first aspect of this application provides an in-vehicle charge and discharge system, where the system includes: an alternating current interface, an isolating transfer switch, a first converter, a second converter, a high-voltage battery interface, a low-voltage battery interface, and a controller. The alternating current interface is configured to externally connect to an alternating current power supply or an alternating current load, the high-voltage battery interface is configured to connect to a high-voltage battery that supplies power to a vehicle, and the low-voltage battery interface is configured to connect to a low-voltage battery that supplies power to a low-voltage device in the vehicle.

The controller is configured to control working states of the isolating transfer switch, the first converter, and the second converter, to enable the in-vehicle charge and discharge system to implement different functions. Specifically, the controller is configured to: control the isolating transfer switch to switch to a first conducting state, so that the alternating current interface is conducted with the high-voltage battery interface by using the first converter and the second converter that are connected in series; and also control the first converter to work in a PFC mode or an inverting mode, and control the second converter to work in a DCDC isolating conversion mode; and the controller is further configured to: control the isolating transfer switch to switch to a second conducting state, so that the low-voltage battery interface is conducted with the high-voltage battery interface by using the first converter and the second converter that are connected in series; and also control the first converter to work in a DCDC conversion mode, and control the second converter to work in the DCDC isolating conversion mode.

The controller switches a conducting status of the isolating transfer switch, to implement time division multiplexing of power conversion circuits. To be specific, when the isolating transfer switch switches to the first conducting state, energy transmission between the alternating current interface and the high-voltage battery interface is implemented by using the first converter and the second converter; and when the isolating transfer switch switches to the second conducting state, energy transmission between the low-voltage battery interface and the high-voltage battery interface is implemented by using the first converter and the second converter. Because the first converter and the second converter can be multiplexed in different energy transmission processes, a quantity of converters that need to be disposed in the in-vehicle charge and discharge system can be effectively reduced, to reduce a size of the in-vehicle charge and discharge system, thereby reducing production costs. In addition, the isolating transfer switch and the second converter are disposed, so that electrical isolation between various power supplies can be effectively implemented, to ensure security and reliability of the in-vehicle charge and discharge system.

In a first implementation of the first aspect in the embodiments of this application, the isolating transfer switch in the in-vehicle charge and discharge system may include three terminals, where a first terminal of the isolating transfer switch is connected to the alternating current interface, a second terminal of the isolating transfer switch is connected to the low-voltage battery interface, and a third terminal of the isolating transfer switch, the first converter, the second converter, and the high-voltage battery interface are sequentially connected in series.

The controller may control the first terminal of the isolating transfer switch to be conducted with the third terminal of the isolating transfer switch, so that the isolating transfer switch switches to the first conducting state; and the controller may control the second terminal of the isolating transfer switch to be conducted with the third terminal of the isolating transfer switch, so that the isolating transfer switch switches to the second conducting state. In this way, switching between the first conducting state and the second conducting state is implemented by controlling conducting relationships between the three terminals in the isolating transfer switch, so that the first converter and the second converter in the in-vehicle charge and discharge system can be multiplexed in different energy transmission processes, to reduce the quantity of converters that need to be disposed in the in-vehicle charge and discharge system, and reduce the size of the in-vehicle charge and discharge system.

In a second implementation of the first aspect in the embodiments of this application, a first switch may be used as the isolating transfer switch in the in-vehicle charge and discharge system. One terminal of the alternating current interface is connected to a first movable contact of the first switch, the other terminal of the alternating current interface is connected to a first port of the first converter, an anode port of the low-voltage battery interface is connected to a second movable contact of the first switch, a cathode port of the low-voltage battery interface is grounded, and a static contact of the first switch is connected to the first port of the first converter.

The controller may control the first movable contact of the first switch to be conducted with the static contact of the first switch, so that the isolating transfer switch switches to the first conducting state; and the controller may control the second movable contact of the first switch to be conducted with the static contact of the first switch, so that the isolating transfer switch switches to the second conducting state. In this way, a double-contact switch (namely, the first switch) is used as the isolating transfer switch, and switching between the first conducting state and the second conducting state is implemented by controlling conducting relationships between the movable contacts and the static contact in the isolating transfer switch, so that the first converter and the second converter in the in-vehicle charge and discharge system can be multiplexed in different energy transmission processes, to reduce the quantity of converters that need to be disposed in the in-vehicle charge and discharge system, and reduce the size of the in-vehicle charge and discharge system.

In a third implementation of the first aspect in the embodiments of this application, the first converter may include a first inductor, a first switch tube, a second switch tube, a third switch tube, and a fourth switch tube, the first port of the first converter includes a first access point and a second access point, and a second port of the first converter includes a third access point and a fourth access point. In the first converter, the first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point. The static contact of the first switch is connected to the first access point, the first access point is connected to a middle point of the first bridge arm by using the first inductor, the other terminal of the alternating current interface is connected to a middle point of the second bridge arm by using the second access point, and the cathode port of the low-voltage battery interface is connected to the third access point, to be grounded together with the first converter.

When the first movable contact of the first switch is conducted with the static contact of the first switch, the controller may control switch-on and switch-off of the first switch tube, the second switch tube, the third switch tube, and the fourth switch tube, so that the first converter works in the PFC mode or the inverting mode. When the second movable contact of the first switch is conducted with the static contact of the first switch, the controller may control switch-on and switch-off of the first switch tube, the second switch tube, the third switch tube, and the fourth switch tube, so that the first converter works in a direct current boost (boost) mode or a direct current buck (buck) mode. In this way, when the isolating transfer switch is in different conducting states, the controller may control switch-on and switch-off of the switch tubes in the first converter, so that the first converter works in a corresponding mode, thereby effectively implementing energy transmission between the alternating current interface and the high-voltage battery interface, or energy transmission between the high-voltage battery interface and the low-voltage battery interface.

In a fourth implementation of the first aspect in the embodiments of this application, the isolating transfer switch may include both the first switch and a second switch. In other words, the first switch and the second switch are jointly used as the isolating transfer switch. One terminal of the alternating current interface is connected to the first movable contact of the first switch, and the other terminal of the alternating current interface is connected to a first movable contact of the second switch; and the anode port of the low-voltage battery interface is connected to a common point, where the common point is a connection point between the second movable contact of the first switch and a second movable contact of the second switch. The cathode port of the low-voltage battery interface is grounded, and the static contact of the first switch and a static contact of the second switch are connected to the first port of the first converter.

The controller may control the first movable contact of the first switch to be conducted with the static contact of the first switch, and control the first movable contact of the second switch to be conducted with the static contact of the second switch, so that the isolating transfer switch switches to the first conducting state; and the controller may control the second movable contact of the first switch to be conducted with the static contact of the first switch, and control the second movable contact of the second switch to be conducted with the static contact of the second switch, so that the isolating transfer switch switches to the second conducting state. In this way, two double-contact switches (namely, the first switch and the second switch) are used as the isolating transfer switch, and switching between the first conducting state and the second conducting state is implemented by controlling conducting relationships between the movable contacts and the static contacts in the two double-contact switches, so that the first converter and the second converter in the in-vehicle charge and discharge system can be multiplexed in different energy transmission processes, to reduce the quantity of converters that need to be disposed in the in-vehicle charge and discharge system, and reduce the size of the in-vehicle charge and discharge system.

In a fifth implementation of the first aspect in the embodiments of this application, the first converter may include a first inductor, a second inductor, a first switch tube, a second switch tube, a third switch tube, and a fourth switch tube, the first port of the first converter includes a first access point and a second access point, and a second port of the first converter includes a third access point and a fourth access point. In the first converter, the first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point. The static contact of the first switch is connected to the first access point, the first access point is connected to a middle point of the first bridge arm by using the first inductor, the static contact of the second switch is connected to the second access point, the second access point is connected to a middle point of the second bridge arm by using the second inductor, and the cathode port of the low-voltage battery interface is connected to the third access point, to be grounded together with the first converter.

When the first movable contact of the first switch is conducted with the static contact of the first switch, and when the first movable contact of the second switch is conducted with the static contact of the second switch, the controller controls switch-on and switch-off of the first switch tube, the second switch tube, the third switch tube, and the fourth switch tube, so that the first converter works in the PFC mode or the inverting mode. When the second movable contact of the first switch is conducted with the static contact of the first switch, and when the second movable contact of the second switch is conducted with the static contact of the second switch, the controller controls switch-on and switch-off of the first switch tube and the second switch tube in a first parallel branch, and also controls switch-on and switch-off of the third switch tube and the fourth switch tube in a second parallel branch, so that the first converter works in the parallel boost mode or the parallel buck mode. The first parallel branch includes the first inductor, the first switch tube, and the second switch tube, and the second parallel branch includes the second inductor, the third switch tube, and the fourth switch tube. In this way, the switch tubes in the first converter are all multiplexed, and when the first converter works in various modes, the switch tubes in the first converter can be fully used, to ensure energy transmission with maximum efficiency.

In a sixth implementation of the first aspect in the embodiments of this application, the in-vehicle charge and discharge system may further include a third switch. The cathode port of the low-voltage battery interface may be grounded by using the third switch. Specifically, the cathode port of the low-voltage battery interface may be connected to the third access point of the first converter by using the third switch, to implement electrical isolation between the cathode port of the low-voltage battery interface and the first converter.

When controlling the isolating transfer switch to switch to the first conducting state, the controller may control the third switch to be disconnected; and when controlling the isolating transfer switch to switch to the second conducting state, the controller may control the third switch to be closed. In this way, electrical isolation between the low-voltage battery interface and the first converter is ensured more effectively.

In a seventh implementation of the first aspect in the embodiments of this application, the second converter in the in-vehicle charge and discharge system may include a first power conversion circuit, an isolation transformer, and a second power conversion circuit. The first power conversion circuit may invert an input direct current into an alternating current, or rectify an input alternating current into a direct current under control of the controller. The second power conversion circuit may rectify an input alternating current into a direct current, or invert an input direct current into an alternating current under control of the controller. The isolation transformer is configured to: isolate and transform an alternating current of an input terminal to an output terminal.

The second converter in this structure can effectively implement electrical isolation between the alternating current interface and the high-voltage battery interface or between the low-voltage battery interface and the high-voltage battery interface, so that effective boost or buck processing can be performed on electric energy in an energy transmission process.

In an eighth implementation of the first aspect in the embodiments of this application, the in-vehicle charge and discharge system further includes a plurality of energy storage units, to be specific, includes a first capacitor, a second capacitor, and a third capacitor. The first capacitor is connected in parallel to the low-voltage battery interface, the second capacitor is disposed between the first converter and the second converter, and is connected in parallel to the first converter, and the third capacitor is connected in parallel to the high-voltage battery interface. The first capacitor, the second capacitor, and the third capacitor are used as intermediate energy storage units in the in-vehicle charge and discharge system, to store energy in energy transmission. A second aspect of this application provides an in-vehicle charge and discharge control method applied to a controller, where the controller is configured to control an in-vehicle charge and discharge circuit (namely, a circuit structure including devices except the controller in the in-vehicle charge and discharge system provided in the first aspect). Specifically, the controller may control the isolating transfer switch to switch to a first conducting state, so that the alternating current interface is conducted with the high-voltage battery interface by using the first converter and the second converter that are connected in series; and also control the first converter to work in a PFC mode or an inverting mode, and control the second converter to work in a DCDC isolating conversion mode. The controller may further control the isolating transfer switch to switch to a second conducting state, so that the low-voltage battery interface is conducted with the high-voltage battery interface by using the first converter and the second converter that are connected in series; and also control the first converter to work in a DCDC conversion mode, and control the second converter to work in the DCDC isolating conversion mode.

In the in-vehicle charge and discharge control method, the controller switches a conducting status of the isolating transfer switch, to implement time division multiplexing of power conversion circuits, to be specific, enable the first converter and the second converter to be multiplexed in different energy transmission processes. Therefore, a quantity of converters that need to be disposed in the in-vehicle charge and discharge system can be effectively reduced, to reduce a size of the in-vehicle charge and discharge system, thereby reducing production costs. In addition, the isolating transfer switch and the second converter are disposed, so that electrical isolation between various power supplies can be effectively implemented, to ensure security and reliability of the in-vehicle charge and discharge system.

In a first implementation of the second aspect in the embodiments of this application, the in-vehicle charge and discharge circuit may be connected in the following manner: The alternating current interface is connected to a first terminal of the isolating transfer switch, the low-voltage battery interface is connected to a second terminal of the isolating transfer switch, and a third terminal of the isolating transfer switch, the first converter, the second converter, and the high-voltage battery interface are sequentially connected in series.

In this case, if energy needs to be transmitted between the alternating current interface and the high-voltage battery interface, the controller may control the first terminal of the isolating transfer switch to be conducted with the third terminal of the isolating transfer switch, so that the isolating transfer switch switches to the first conducting state, and the alternating current interface is sequentially connected in series to the first converter, the second converter, and the high-voltage battery interface by using the isolating transfer switch. If energy needs to be transmitted between the low-voltage battery interface and the high-voltage battery interface, the controller may control the second terminal of the isolating transfer switch to be conducted with the third terminal of the isolating transfer switch, so that the isolating transfer switch switches to the second conducting state, and the low-voltage battery interface is sequentially connected in series to the first converter, the second converter, and the high-voltage battery interface by using the isolating transfer switch.

In a second implementation of the second aspect in the embodiments of this application, the isolating transfer switch may specifically include a first switch, where one terminal of the alternating current interface is connected to a first movable contact of the first switch, and the other terminal of the alternating current interface is connected to a first port of the first converter; an anode port of the low-voltage battery interface is connected to a second movable contact of the first switch, and a cathode port of the low-voltage battery interface is grounded; and a static contact of the first switch is connected to the first port of the first converter.

In this case, the controller may control the first movable contact of the first switch to be conducted with the static contact of the first switch, so that the isolating transfer switch switches to the first conducting state; and may control the second movable contact of the first switch to be conducted with the static contact of the first switch, so that the isolating transfer switch switches to the second conducting state.

In a third implementation of the second aspect in the embodiments of this application, on the basis that the isolating transfer switch includes the first switch, the first converter may include a first inductor, a first switch tube, a second switch tube, a third switch tube, and a fourth switch tube; the first port of the first converter includes a first access point and a second access point; and a second port of the first converter includes a third access point and a fourth access point. The first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point; the static contact of the first switch is connected to the first access point, and the first access point is connected to a middle point of the first bridge arm by using the first inductor; the other terminal of the alternating current interface is connected to a middle point of the second bridge arm by using the second access point; and the cathode port of the low-voltage battery interface is connected to the third access point.

For the first converter, the controller may specifically control the working mode of the first converter in the following manner:

The controller controls switch-on and switch-off of the first switch tube, the second switch tube, the third switch tube, and the fourth switch tube when the first movable contact of the first switch is conducted with the static contact of the first switch, so that the first converter works in the PFC mode or the inverting mode; and controls switch-on and switch-off of the first switch tube and the second switch tube when the second movable contact of the first switch is conducted with the static contact of the first switch, so that the first inductor, the first switch tube, and the second switch tube in the first converter work in a boost mode or a buck mode, to be specific, the first converter works in the boost mode or the buck mode. In this case, both the third switch tube and the fourth switch tube in the first converter are in a switch-off state.

In a fourth implementation of the second aspect in the embodiments of this application, the isolating transfer switch may specifically include the first switch and a second switch, where one terminal of the alternating current interface is connected to the first movable contact of the first switch, and the other terminal of the alternating current interface is connected to a first movable contact of the second switch; the anode port of the low-voltage battery interface is connected to a common point, where the common point is a connection point between the second movable contact of the first switch and a second movable contact of the second switch; the cathode port of the low-voltage battery interface is grounded, and usually, the cathode port of the low-voltage battery interface may be grounded together with the first converter; and the static contact of the first switch and a static contact of the second switch are connected to the first port of the first converter.

In this case, the controller may specifically control the first movable contact of the first switch to be conducted with the static contact of the first switch, and control the first movable contact of the second switch to be conducted with the static contact of the second switch, so that the isolating transfer switch switches to the first conducting state; and may control the second movable contact of the first switch to be conducted with the static contact of the first switch, and control the second movable contact of the second switch to be conducted with the static contact of the second switch, so that the isolating transfer switch switches to the second conducting state.

In a fifth implementation of the second aspect in the embodiments of this application, on the basis that the isolating transfer switch includes the first switch and the second switch, the first converter may include a first inductor, a second inductor, a first switch tube, a second switch tube, a third switch tube, and a fourth switch tube; the first port of the first converter includes a first access point and a second access point; and a second port of the second converter includes a third access point and a fourth access point. The first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point. The static contact of the first switch is connected to the first access point, and the first access point is connected to a middle point of the first bridge arm by using the first inductor; the static contact of the second switch is connected to the second access point, and the second access point is connected to a middle point of the second bridge arm by using the second inductor; and the cathode port of the low-voltage battery is connected to the third access point.

For the first converter, the controller may specifically control the working mode of the first converter in the following manner:
When the in-vehicle charge and discharge system includes the first switch and the second switch, the controller controls switch-on and switch-off of the first switch tube, the second switch tube, the third switch tube, and the fourth switch tube when the first movable contact of the first switch is conducted with the static contact of the first switch, and when the first movable contact of the second switch is conducted with the static contact of the second switch, so that the first converter works in the PFC mode or the inverting mode; and the controller controls switch-on and switch-off of the first switch tube and the second switch tube in a first parallel branch and controls switch-on and switch-off of the third switch tube and the fourth switch tube in a second parallel branch when the second movable contact of the first switch is conducted with the static contact of the first switch and when the second movable contact of the second switch is conducted with the static contact of the second switch, so that the first converter works in a parallel boost mode or a parallel buck mode, where the first parallel branch specifically includes the first inductor, the first switch tube, and the second switch tube; and the second parallel branch specifically includes the second inductor, the third switch tube, and the fourth switch tube.

In a sixth implementation of the second aspect in the embodiments of this application, on the basis that the isolating transfer switch includes only the first switch, or includes both the first switch and the second switch, to further ensure that the in-vehicle charge and discharge system can implement secure electrical isolation, a third switch may be added to the in-vehicle charge and discharge circuit, and the cathode port of the low-voltage battery interface is grounded by using the third switch.

Correspondingly, when controlling the isolating transfer switch to switch to the first conducting state, the controller further needs to control the fourth switch to be disconnected; and when controlling the isolating transfer switch to switch to the second conducting state, the controller further needs to control the fourth switch to be closed.

### BRIEF DESCRIPTION OF DRAWINGS

FIG. 1 is a schematic diagram of a structure of an in-vehicle charge and discharge system in a related technology;
FIG. 2 is a schematic diagram of a structure of another in-vehicle charge and discharge system in a related technology;
FIG. 3 is a schematic diagram of a structure of an in-vehicle charge and discharge system according to an embodiment of this application;
FIG. 4 is a schematic diagram of first energy transmission of an in-vehicle charge and discharge system according to an embodiment of this application;
FIG. 5 is a schematic diagram of second energy transmission of an in-vehicle charge and discharge system according to an embodiment of this application;
FIG. 6 is a schematic diagram of third energy transmission of an in-vehicle charge and discharge system according to an embodiment of this application;
FIG. 7 is a schematic diagram of fourth energy transmission of an in-vehicle charge and discharge system according to an embodiment of this application;
FIG. 8 is a schematic diagram of a circuit structure of an in-vehicle charge and discharge system according to an embodiment of this application;
FIG. 9 is a schematic diagram of a circuit structure of another in-vehicle charge and discharge system according to an embodiment of this application; and
FIG. 10 is a schematic flowchart of an in-vehicle charge and discharge control method according to an embodiment of this application.

### DESCRIPTION OF EMBODIMENTS

To make solutions of this application more comprehensible for a person skilled in the art, the technical solutions in embodiments of this application are clearly and completely described in the following with reference to accompanying drawings in the embodiments of this application. It is clearly that the described embodiments are merely some but not all of the embodiments of this application. All other embodiments obtained by persons of ordinary skill in the art based on the embodiments of this application without creative efforts shall fall within the protection scope of this application.

In the specification, claims, and the accompanying drawings of this application, the terms "first", "second", "third", "fourth", and the like (if existent) are intended to distinguish between similar objects but do not necessarily indicate a specific order or sequence. It should be understood that data termed in such a way is interchangeable in a proper circumstance, so that the embodiments of this application described herein can be implemented in other orders than the order illustrated or described herein.

For the technical problem currently existing in a related technology: how to reduce a size of an in-vehicle charge and discharge system and reduce production costs of the in-vehicle charge and discharge system when working performance of the in-vehicle charge and discharge system is ensured, the embodiments of this application provide an in-vehicle charge and discharge system. An isolating transfer switch is added to the in-vehicle charge and discharge system. A controller in the in-vehicle charge and discharge system switches a conducting status of the isolating transfer switch, and correspondingly adjusts working modes of a first converter and a second converter, to implement time division multiplexing of power conversion circuits in a plurality of energy transmission processes. In this way, a quantity of converters that need to be disposed in the in-vehicle charge and discharge system is reduced, to reduce the size of the in-vehicle charge and discharge system, thereby reducing production costs.

### SYSTEM EMBODIMENT 1

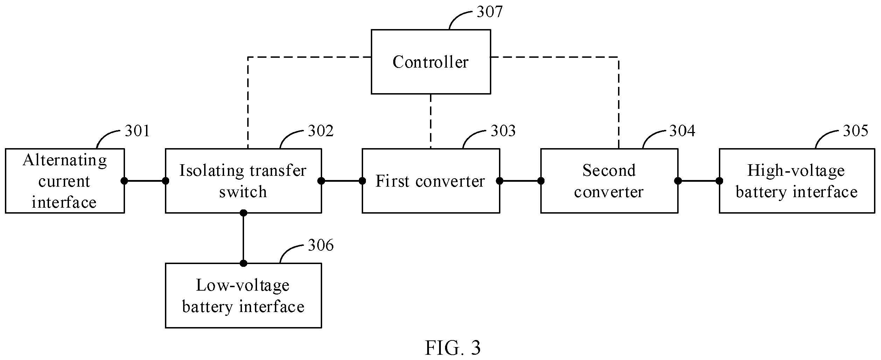

FIG. 3 is a schematic diagram of a structure of an in-vehicle charge and discharge system according to an embodiment of this application. As shown in FIG. 3, the in-vehicle charge and discharge system includes an alternating current interface 301, an isolating transfer switch 302, a first converter 303, a second converter 304, a high-voltage battery interface 305, a low-voltage battery interface 306, and a controller 307.

The alternating current interface 301 is configured to connect to an alternating current power supply or an alternating current load. The alternating current power supply may be an external power supply configured to charge an electric vehicle, for example, a charging pile. When the alternating current power supply is connected to the alternating current interface 301, the controller 307 may control the isolating transfer switch 302, the first converter 303, and the second converter 304, to enable the alternating current power supply to supply power to a high-voltage battery connected to the high-voltage battery interface 305. The alternating current load may be a load that requires alternating current power supply, for example, an electric cooker or a refrigerator. When the alternating current load is connected to the alternating current interface 301, the controller 307 may control the isolating transfer switch 302, the first converter 303, and the second converter 304, to enable the high-voltage battery connected to the high-voltage battery interface 305 to supply power to the alternating current load.

The high-voltage battery interface 305 is configured to connect to the high-voltage battery that supplies power to a vehicle, and the low-voltage battery interface 306 is configured to connect to a low-voltage battery that supplies power to a low-voltage device in the vehicle. The controller 307 may control the isolating transfer switch 302, the first converter 303, and the second converter 304, to enable the high-voltage battery connected to the high-voltage battery interface 305 to charge the low-voltage battery connected to the low-voltage battery interface 306, or enable the low-voltage battery connected to the low-voltage battery interface 306 to transmit energy to the high-voltage battery connected to the high-voltage battery interface 305.

The controller 307 is configured to: control the isolating transfer switch 302 to switch to a first conducting state, so that the alternating current interface 301 is conducted with the high-voltage battery interface 305 by using the first converter 303 and the second converter 304 that are connected in series; and also control the first converter 303 to work in a PFC mode or an inverting mode, and control the second converter 304 to work in a DCDC isolating conversion mode.

When the alternating current power supply connected to the alternating current interface 301 charges the high-voltage battery connected to the high-voltage battery interface 305, the controller 307 controls the isolating transfer switch 302 to switch to the first conducting state. In this case, the alternating current interface 301 (which may alternatively be understood as the alternating current power supply), the first converter 303, the second converter 304, and the high-voltage battery interface 305 (which may alternatively be understood as the high-voltage battery) are sequentially connected in series. At the same time, to ensure normal transmission of energy, the controller 307 needs to control the first converter 303 to work in the PFC mode and control the second converter 304 to work in the DCDC isolating conversion mode.

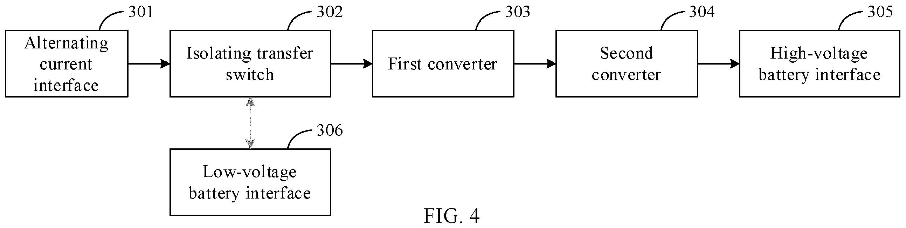

FIG. 4 is a schematic diagram of energy transmission in the foregoing scenario. As shown in FIG. 4, the alternating current power supply connected to the alternating current interface 301 charges, sequentially by using the isolating transfer switch 302, the first converter 303 in the PFC mode, and the second converter 304 in the DCDC isolating conversion mode, the high-voltage battery connected to the high-voltage battery interface 305, and there is no energy exchange between the low-voltage battery interface 306 and the energy transmission path.

When the high-voltage battery connected to the high-voltage battery interface 305 supplies power to the alternating current load connected to the alternating current interface 301, the controller 307 controls the isolating transfer switch 302 to switch to the first conducting state. In this case, the alternating current interface 301 (which may alternatively be understood as the alternating current load), the first converter 303, the second converter 304, and the high-voltage battery interface 305 (which may alternatively be understood as the high-voltage battery) are sequentially connected in series. At the same time, to ensure normal transmission of energy, the controller 307 needs to control the first converter 303 to work in the inverting mode and control the second converter 304 to work in the DCDC isolating conversion mode.

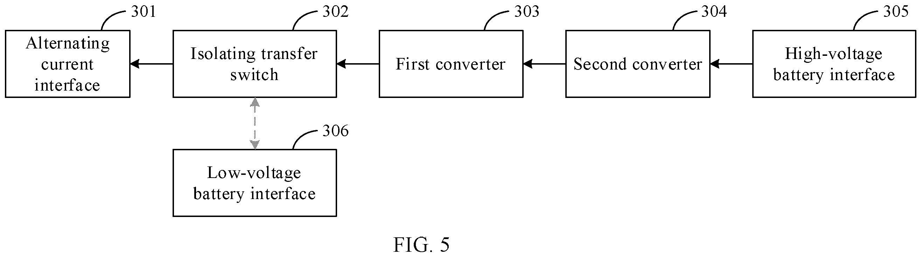

FIG. 5 is a schematic diagram of energy transmission in the foregoing scenario. As shown in FIG. 5, the high-voltage battery connected to the high-voltage battery interface 305 supplies, sequentially by using the second converter 304 in the DCDC isolating conversion mode, the first converter 303 in the inverting mode, and the isolating transfer switch 302, power to the alternating current load connected to the alternating current interface 301, and there is no energy exchange between the low-voltage battery interface 306 and the energy transmission path.

The controller 307 is further configured to: control the isolating transfer switch 302 to switch to a second conducting state, so that the low-voltage battery interface 306 is conducted with the high-voltage battery interface 305 by using the first converter 303 and the second converter 304 that are connected in series; and also control the first converter 303 to work in the DCDC conversion mode and control the second converter 304 to work in the DCDC isolating conversion mode.

When the high-voltage battery connected to the high-voltage battery interface 305 charges the low-voltage battery connected to the low-voltage battery interface 306, the controller 307 controls the isolating transfer switch 302 to switch to the second conducting state. In this case, the low-voltage battery interface 306 (which may alternatively be understood as the low-voltage battery), the first converter 303, the second converter 304, and the high-voltage battery interface 305 (which may alternatively be understood as the high-voltage battery) are sequentially connected in series. At the same time, to ensure normal transmission of energy, the controller 307 needs to control the first converter 303 to work in a direct current buck (buck) mode, and control the second converter 304 to work in the DCDC isolating conversion mode.

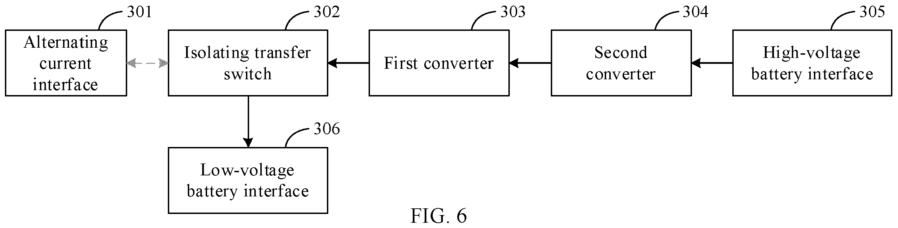

FIG. 6 is a schematic diagram of energy transmission in the foregoing scenario. As shown in FIG. 6, the high-voltage battery connected to the high-voltage battery interface 305 charges, sequentially by using the second converter 304 in the DCDC isolating conversion mode, the first converter 303 in the buck mode, and the isolating transfer switch 302, the low-voltage battery connected to the low-voltage battery interface 306, and there is no energy exchange between the alternating current interface 301 and the energy transmission path.

When the low-voltage battery connected to the low-voltage battery interface 306 transmits energy to the high-voltage battery connected to the high-voltage battery interface 305, the controller 307 controls the isolating transfer switch 302 to switch to the second conducting state. In this case, the low-voltage battery interface 306 (which may alternatively be understood as the low-voltage battery), the first converter 303, the second converter 304, and the high-voltage battery interface 305 (which may alternatively be understood as the high-voltage battery) are sequentially connected in series. At the same time, to ensure normal transmission of energy, the controller 307 needs to control the first converter 303 to work in the direct current boost (boost) mode and control the second converter 304 to work in the DCDC isolating conversion mode.

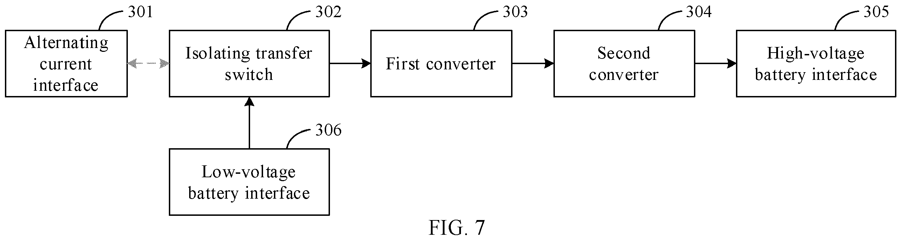

FIG. 7 is a schematic diagram of energy transmission in the foregoing scenario. As shown in FIG. 7, the low-voltage battery connected to the low-voltage battery interface 306 transmits, sequentially by using the isolating transfer switch 302, the first converter 303 in the boost mode, and the second converter 304 in the DCDC isolating conversion mode, energy to the high-voltage battery connected to the high-voltage battery interface 305, and there is no energy exchange between the alternating current interface 301 and the energy transmission path.

In actual application, devices except the controller in the in-vehicle charge and discharge system may be specifically connected in the following manner: The alternating current interface 301 is connected to a first terminal of the isolating transfer switch 302, the low-voltage battery interface 306 is connected to a second terminal of the isolating transfer switch 302, and a third terminal of the isolating transfer switch 302, the first converter 303, the second converter 304, and the high-voltage battery interface 305 are sequentially connected in series. The controller 307 may control the isolating transfer switch 302, the first converter 303, and the second converter 304 by using a communications bus.

In other words, the isolating transfer switch 302 includes three terminals, where the first terminal is connected to the alternating current interface 301, the second terminal is connected to the low-voltage battery interface 306, and the third terminal is connected to one terminal of the first converter. When energy is transmitted between the alternating current interface 301 and the high-voltage battery interface 305, the controller 307 may control the first terminal of the isolating transfer switch 302 to be conducted with the third terminal of the isolating transfer switch 302, so that the isolating transfer switch 302 switches to the first conducting state, and the alternating current interface 301 is sequentially connected in series to the first converter 303, the second converter 304, and the high-voltage battery interface 305 by using the isolating transfer switch 302. When energy is transmitted between the low-voltage battery interface 306 and the high-voltage battery interface 305, the controller 307 may control the second terminal of the isolating transfer switch 302 to be conducted with the third terminal of the isolating transfer switch 302, so that the isolating transfer switch 302 switches to the second conducting state, and the low-voltage battery interface 306 is sequentially connected in series to the first converter 303, the second converter 304, and the high-voltage battery interface 305 by using the isolating transfer switch 302.

It should be noted that, in actual application, the isolating transfer switch 302 may be a contact switch, or may be an electromagnetic induction switch such as a relay or a contactor. A type of the isolating transfer switch 302 is not specifically limited herein in this application.

In the foregoing in-vehicle charge and discharge system, the controller switches a conducting status of the isolating transfer switch, to implement time division multiplexing of power conversion circuits. To be specific, when the isolating transfer switch switches to the first conducting state, energy transmission between the alternating current interface and the high-voltage battery interface is implemented by using the first converter and the second converter; and when the isolating transfer switch switches to the second conducting state, energy transmission between the low-voltage battery interface and the high-voltage battery interface is implemented by using the first converter and the second converter. Because the first converter and the second converter can be multiplexed in different energy transmission processes, a quantity of converters that need to be disposed in the in-vehicle charge and discharge system can be effectively reduced, to reduce a size of the in-vehicle charge and discharge system, thereby reducing production costs. In addition, the isolating transfer switch and the second converter are disposed, so that electrical isolation between various power supplies can be effectively implemented, to ensure security and reliability of the in-vehicle charge and discharge system.

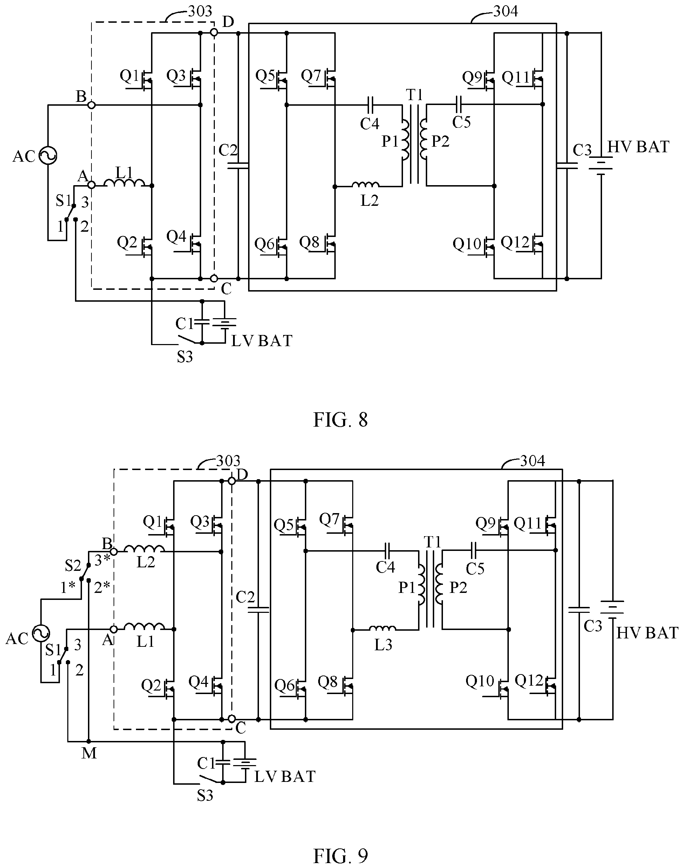

To help further understand the in-vehicle charge and discharge system provided in this embodiment of this application, the following describes a circuit structure and a working principle of the in-vehicle charge and discharge system in this application in detail with reference to two circuit structures of the in-vehicle charge and discharge system that are shown in FIG. 8 and FIG. 9 as examples. It should be understood that, the circuit structures of the in-vehicle charge and discharge system that are shown in FIG. 8 and FIG. 9 are merely examples. In actual application, the in-vehicle charge and discharge system in this application may alternatively be in another circuit structure.

It should be noted that, the controller usually controls the isolating transfer switch, the first converter, and the second converter in the in-vehicle charge and discharge system by using a communications bus, and therefore, the controller in the in-vehicle charge and discharge system is not embodied in the circuit structures shown in FIG. 8 and FIG. 9.

### SYSTEM EMBODIMENT 2

FIG. 8 is a schematic diagram of an example of a circuit structure of an in-vehicle charge and discharge system according to an embodiment of this application.

As shown in FIG. 8, a first switch S 1 is used as an isolating transfer switch in the in-vehicle charge and discharge system; one terminal of an alternating current interface AC is connected to a first movable contact (contact 1) of the first switch S1, and the other terminal of the alternating current interface AC is connected to a first port of a first converter 303; an anode port of a low-voltage battery interface LV BAT is connected to a second movable contact (contact 2) of the first switch S1, a cathode port of the low-voltage battery interface LV BAT is grounded, and usually, the cathode port of the low-voltage battery interface LV BAT may be grounded together with the first converter 303; and a static contact (contact 3) of the first switch S1 is connected to the first port of the first converter 303.

For the in-vehicle charge and discharge system shown in FIG. 8, the controller may specifically control the first movable contact (contact 1) of the first switch S1 to be conducted with the static contact (contact 3) of the first switch S1, so that the isolating transfer switch switches to a first conducting state; and may control the second movable contact (contact 2) of the first switch S1 to be conducted with the static contact (contact 3) of the first switch S1, so that the isolating transfer switch switches to a second conducting state.

Optionally, to further ensure that the in-vehicle charge and discharge system can implement secure electrical isolation, a third switch S3 may be added to the in-vehicle charge and discharge system. As shown in FIG. 8, the cathode port of the low-voltage battery interface LV BAT is grounded together with the first converter 303 by using the third switch S3.

Correspondingly, when controlling the isolating transfer switch to switch to the first conducting state, the controller not only needs to control the first movable contact (contact 1) of the first switch S1 to be conducted with the static contact (contact 3) of the first switch S1, but also needs to control the third switch S3 to be disconnected; and when controlling the isolating transfer switch to switch to the second conducting state, the controller not only needs to control the second movable contact (contact 2) of the first switch S1 to be conducted with the static contact (contact 3) of the first switch S1, but also needs to control the third switch S3 to be closed.

Optionally, when the in-vehicle charge and discharge system includes the first switch S1, or includes both the first switch S 1 and the third switch S3, the first converter 303 in the in-vehicle charge and discharge system may be specifically in a converter structure shown in FIG. 8 and includes: a first inductor L1, a first switch tube Q1, a second switch tube Q2, a third switch tube Q3, and a fourth switch tube Q4. The first port of the first converter 303 specifically includes a first access point A and a second access point B; and a second port of the first converter 303 specifically includes a third access point C and a fourth access point D.

The first switch tube Q1 and the second switch tube Q2 are connected in series to form a first bridge arm, the third switch tube Q3 and the fourth switch tube Q4 are connected in series to form a second bridge arm, the first bridge arm and the second bridge arm are connected in parallel to each other to the third access point C and the fourth access point D, where the third access point C is a ground point of the first converter 303. One terminal of the alternating current interface AC is connected to the first movable contact (contact 1) of the first switch S1, the other terminal of the alternating current interface AC is connected to the second access point B of the first converter 303, and the second access point B is connected to a middle point of the second bridge arm; and the static contact (contact 3) of the first switch S1 is connected to the first access point A of the first converter 303, and the first access point A is connected to a middle point of the first bridge arm by using the first inductor L 1. The anode port of the low-voltage battery interface LV BAT is connected to the second movable contact (contact 2) of the first switch S 1. When the in-vehicle charge and discharge system does not include the third switch S3, the cathode port of the low-voltage battery interface LV BAT is directly connected to the third access point C of the first converter 303. When the in-vehicle charge and discharge system includes the third switch S3, the cathode port of the low-voltage battery interface LV BAT is connected to the third access point C of the first converter 303 by using the third switch S3.

When the first converter 303 is in the foregoing converter structure, the controller may specifically control a working mode of the first converter 303 in the following manner:
When the in-vehicle charge and discharge system includes the first switch S1 and does not include the third switch S3, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, so that the first converter 303 works in a PFC mode or an inverting mode; and controls switch-on and switch-off of the first switch tube Q1 and the second switch tube Q2 when the second movable contact (contact 2) of the first switch S1 is conducted with the static contact (contact 3) of the first switch S 1, so that the first inductor L1, the first switch tube Q1, and the second switch tube Q2 in the first converter 303 work in a boost mode or a buck mode, to be specific, the first converter 303 works in the boost mode or the buck mode. In this case, both the third switch tube Q3 and the fourth switch tube Q4 in the first converter 303 are in a switch-off state.

When the in-vehicle charge and discharge system includes both the first switch S1 and the third switch S3, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, and when the third switch S3 is disconnected, so that the first converter 303 works in a PFC mode or an inverting mode; and controls switch-on and switch-off of the first switch tube Q1 and the second switch tube Q2 when the second movable contact (contact 2) of the first switch S1 is conducted with the static contact (contact 3) of the first switch S1, and when the third switch S3 is closed, so that the first inductor L1, the first switch tube Q1, and the second switch tube Q2 in the first converter 303 work in a boost mode or a buck mode, to be specific, the first converter 303 works in the boost mode or the buck mode. In this case, both the third switch tube Q3 and the fourth switch tube Q4 in the first converter 303 are in a switch-off state.

It should be understood that, the circuit structure of the first converter 303 shown in FIG. 8 is merely an example. In actual application, a converter in another circuit structure may alternatively be used as the first converter 303. A structure of the first converter 303 is not specifically limited herein in this application.

Optionally, to ensure secure electrical isolation of the in-vehicle charge and discharge system, the second converter 304 in the in-vehicle charge and discharge system may include a first power conversion circuit, an isolation transformer, and a second power conversion circuit.

The first power conversion circuit is configured to: invert an input direct current into an alternating current, or rectify an input alternating current into a direct current under control of the controller. The second power conversion circuit is configured to: rectify an input alternating current into a direct current, or invert an input direct current into an alternating current under control of the controller. The isolation transformer is configured to: isolate and transform an alternating current of an input terminal of the isolation transformer to an output terminal of the isolation transformer.

As shown in FIG. 8, the first power conversion circuit in the second converter 304 may specifically include: a fifth switch tube Q5, a sixth switch tube Q6, a seventh switch tube Q7, and an eighth switch tube Q8. The fifth switch tube Q5 and the sixth switch tube Q6 are connected in series to form a third bridge arm. The seventh switch tube Q7 and the eighth switch tube Q8 are connected in series to form a fourth bridge arm. The third bridge arm and the fourth bridge arm are connected in parallel to each other. The first power conversion circuit is connected in series to the first converter 303 by using the second port of the first converter 303. In other words, the first power conversion circuit is connected in series to the first converter 303 by using the third access point C and the fourth access point D.

The second power conversion circuit in the second converter 304 may specifically include: a ninth switch tube Q9, a tenth switch tube Q10, an eleventh switch tube Q11, and a twelfth switch tube Q12. The ninth switch tube Q9 and the tenth switch tube Q10 are connected in series to form a fifth bridge arm. The eleventh switch tube Q11 and the twelfth switch tube Q12 are connected in series to form a sixth bridge arm. The fifth bridge arm and the sixth bridge arm are connected in parallel to each other. The second power conversion circuit is connected in series to a high-voltage battery interface HV BAT.

The isolation transformer in the second converter 304 may specifically include a first coil P1, a second coil P2, and an iron core T1. The first coil P1 is coupled to the second coil P2. One terminal of the first coil P1 may be connected to a middle point of the third bridge arm in the first power conversion circuit by using a capacitor C4. The other terminal of the first coil P1 may be connected to a middle point of the fourth bridge arm in the first power conversion circuit by using an inductor L2. One terminal of the second coil P2 may be connected to a middle point of the sixth bridge arm in the second power conversion circuit by using a capacitor C5. The other terminal of the second coil P2 may be directly connected to a middle point of the fifth bridge arm in the second power conversion circuit.

When the isolating transfer switch switches to the first conducting state or the second conducting state, the controller controls switch-on and switch-off of the fifth switch tube Q5, the sixth switch tube Q6, the seventh switch tube Q7, the eighth switch tube Q8, the ninth switch tube Q9, the tenth switch tube Q10, the eleventh switch tube Q11, and the twelfth switch tube Q12, so that the second converter 304 works in a DCDC isolating conversion mode.

It should be understood that, the circuit structure of the second converter 304 shown in FIG. 8 is merely an example. In actual application, a converter in another circuit structure may alternatively be used as the second converter 304. A structure of the second converter 304 is not specifically limited herein in this application.

Optionally, to improve working performance of the in-vehicle charge and discharge system, one or more energy storage units may be further added to the in-vehicle charge and discharge system. As shown in FIG. 8, the in-vehicle charge and discharge system may further include a first capacitor C1, a second capacitor C2, and a third capacitor C3. The first capacitor C1 is connected in parallel to the low-voltage battery interface LV BAT. The second capacitor C2 is disposed between the first converter 303 and the second converter 304, and is connected in parallel to both the first converter 303 and the second converter 304. The third capacitor C3 is connected in parallel to the high-voltage battery interface HV BAT. The first capacitor C1, the second capacitor C2, and the third capacitor C3 are used as intermediate energy storage units, to store energy in an energy transmission process.

It should be understood that, in actual application, several capacitors may be disposed in the in-vehicle charge and discharge system as energy storage units based on an actual requirement. A quantity of the energy storage units disposed in the in-vehicle charge and discharge system is not limited herein in this application.

The following describes a working principle of the in-vehicle charge and discharge system shown in FIG. 8 in actual application with reference to the in-vehicle charge and discharge system shown in FIG. 8.

When the alternating current interface AC (which may be understood as an alternating current power supply connected to the alternating current interface AC) transmits energy to the high-voltage battery interface HV BAT (which may be understood as a high-voltage battery connected to the high-voltage battery interface HV BAT), when the in-vehicle charge and discharge system includes only the first switch S1, the controller controls the first movable contact (contact 1) of the first switch S1 to be conducted with the static contact (contact 3) of the first switch S1; and when the in-vehicle charge and discharge system includes both the first switch S1 and the third switch S3, the controller controls the first movable contact (contact 1) of the first switch S1 to be conducted with the static contact (contact 3) of the first switch S 1, and controls the third switch S3 to be disconnected.

At the same time, the controller controls switch-on and switch-off of the first switch tube Q1, the second switch tube Q2, the third switch tube Q3, and the fourth switch tube Q4 in the first converter 303, so that the first converter 303 works in the PFC mode, and energy is transmitted from the alternating current interface AC to the intermediate energy storage unit second capacitor C2. The controller controls the second converter 304, to enable the second converter 304 to work in the DCDC isolating conversion mode. Specifically, the controller controls switch-on and switch-off of the switch tubes in the first power conversion circuit and the second power conversion circuit, so that the first power conversion circuit inverts the input direct current into the alternating current, and after the isolation transformer isolates and transforms the alternating current to an input terminal of the second power conversion circuit, the second power conversion circuit rectifies the alternating current into the direct current, and the direct current is transmitted, by using the third capacitor C3, to the high-voltage battery connected to the high-voltage battery interface HV BAT.

When the high-voltage battery interface HV BAT (which may be understood as the high-voltage battery connected to the high-voltage battery interface HV BAT) transmits energy to the alternating current interface AC (which may be understood as an alternating current load connected to the alternating current interface AC), when the in-vehicle charge and discharge system includes only the first switch S1, the controller controls the first movable contact (contact 1) of the first switch S1 to be conducted with the static contact (contact 3) of the first switch S1; and when the in-vehicle charge and discharge system includes both the first switch S1 and the third switch S3, the controller controls the first movable contact (contact 1) of the first switch S1 to be conducted with the static contact (contact 3) of the first switch S 1, and controls the third switch S3 to be disconnected.

At the same time, the controller controls the second converter 304, to enable the second converter 304 to work in the DCDC isolating conversion mode. Specifically, the controller controls switch-on and switch-off of the switch tubes in the first power conversion circuit and the second power conversion circuit, so that the second power conversion circuit inverts the direct current input by the high-voltage battery interface HV BAT by using the third capacitor C3 into the alternating current, and after the isolation transformer isolates and transforms the alternating current to an input terminal of the first power conversion circuit, the first power conversion circuit rectifies the alternating current into the direct current, and the direct current is transmitted to the intermediate energy storage unit second capacitor C2. The controller controls switch-on and switch-off of the first switch tube Q1, the second switch tube Q2, the third switch tube Q3, and the fourth switch tube Q4 in the first converter 303, so that the first converter 303 works in the inverting mode, inverts the direct current stored in the second capacitor C2 into the alternating current, and transmits the alternating current to the alternating current load connected to the alternating current interface AC.

When the high-voltage battery interface HV BAT (which may be understood as the high-voltage battery connected to the high-voltage battery interface HV BAT) transmits energy to the low-voltage battery interface LV BAT (which may be understood as a low-voltage battery connected to the low-voltage battery interface LV BAT), when the in-vehicle charge and discharge system includes only the first switch S1, the controller controls the second movable contact (contact 2) of the first switch S1 to be conducted with the static contact (contact 3) of the first switch S1; and when the in-vehicle charge and discharge system includes both the first switch S1 and the third switch S3, the controller controls the second movable contact (contact 2) of the first switch S1 to be conducted with the static contact (contact 3) of the first switch S1, and controls the third switch S3 to be closed.

At the same time, the controller controls the second converter 304, to enable the second converter 304 to work in the DCDC isolating conversion mode. Specifically, the controller controls switch-on and switch-off of the switch tubes in the first power conversion circuit and the second power conversion circuit, so that the second power conversion circuit inverts the direct current input by the high-voltage battery interface HV BAT by using the third capacitor C3 into the alternating current, and after the isolation transformer isolates and transforms the alternating current to an input terminal of the first power conversion circuit, the first power conversion circuit rectifies the alternating current into the direct current, and the direct current is transmitted to the intermediate energy storage unit second capacitor C2. The controller controls switch-on and switch-off of the first switch tube Q1 and the second switch tube Q2 in the first converter 303, so that the first inductor L1, the first switch tube Q1, and the second switch tube Q2 in the first converter 303 work in the buck mode, and the first converter 303 performs direct current buck processing on the direct current stored in the second capacitor C2, and transmits the direct current on which the direct current buck processing is performed to the low-voltage battery connected to the low-voltage battery interface LV BAT.

When the low-voltage battery interface LV BAT (which may be understood as the low-voltage battery connected to the low-voltage battery interface LV BAT) transmits energy to the high-voltage battery interface HV BAT (which may be understood as the high-voltage battery connected to the high-voltage battery interface HV BAT), when the in-vehicle charge and discharge system includes only the first switch S1, the controller controls the second movable contact (contact 2) of the first switch S1 to be conducted with the static contact (contact 3) of the first switch S1; and when the in-vehicle charge and discharge system includes both the first switch S1 and the third switch S3, the controller controls the second movable contact (contact 2) of the first switch S1 to be conducted with the static contact (contact 3) of the first switch S1, and controls the third switch S3 to be closed.

At the same time, the controller controls switch-on and switch-off of the first switch tube Q1 and the second switch tube Q2 in the first converter 303, so that the first inductor L1, the first switch tube Q1, and the second switch tube Q2 in the first converter 303 work in the boost mode, and the first converter 303 performs direct current boost processing on the direct current input by the low-voltage battery interface LV BAT by using the first capacitor C1, and transmits the direct current on which the direct current boost processing is performed to the intermediate energy storage unit second capacitor C2. The controller controls the second converter 304, to enable the second converter 304 to work in the DCDC isolating conversion mode. Specifically, the controller controls switch-on and switch-off of the switch tubes in the first power conversion circuit and the second power conversion circuit, so that the first power conversion circuit inverts the input direct current into the alternating current, and after the isolation transformer isolates and transforms the alternating current to an input terminal of the second power conversion circuit, the second power conversion circuit rectifies the alternating current into the direct current, and the direct current is transmitted, by using the third capacitor C3, to the high-voltage battery connected to the high-voltage battery interface HV BAT.

In the foregoing in-vehicle charge and discharge system, the controller controls a conducting status of the first switch S1, or controls conducting statuses of the first switch S1 and the third switch S3, to implement time division multiplexing of power conversion circuits, to be specific, enable the first converter 303 and the second converter 304 to be multiplexed in different energy transmission processes. Therefore, a quantity of converters that need to be disposed in the in-vehicle charge and discharge system can be effectively reduced, to reduce a size of the in-vehicle charge and discharge system, thereby reducing production costs. In addition, the third switch S3 and the second converter 304 are disposed, so that electrical isolation between various power supplies can be effectively implemented, to ensure security and reliability of the in-vehicle charge and discharge system.

### SYSTEM EMBODIMENT 3

FIG. 9 is a schematic diagram of an example of another circuit structure of an in-vehicle charge and discharge system according to an embodiment of this application.

As shown in FIG. 9, an isolating transfer switch in the in-vehicle charge and discharge system may specifically include a first switch S1 and a second switch S2. One terminal of an alternating current interface AC is connected to a first movable contact (contact 1) of the first switch S1, and the other terminal of the alternating current interface AC is connected to a first movable contact (contact 1*) of the second switch S2; an anode port of a low-voltage battery interface LV BAT is connected to a common point M, where the common point M is a connection point between a second movable contact (contact 2) of the first switch S1 and a second movable contact (contact 2^{∗}) of the second switch S2; a cathode port of the low-voltage battery interface LV BAT is grounded, and usually, the cathode port of the low-voltage battery interface LV BAT may be grounded together with a first converter 303; and a static contact (contact 3) of the first switch S1 and a static contact (contact 3^{∗}) of the second switch S2 are connected to a first port of the first converter 303.

For the in-vehicle charge and discharge system shown in FIG. 9, a controller may specifically control the first movable contact (contact 1) of the first switch S1 to be conducted with the static contact (contact 3) of the first switch S1, and control the first movable contact (contact 1*) of the second switch S2 to be conducted with the static contact (contact 3^{∗}) of the second switch S2, so that the isolating transfer switch switches to a first conducting state; and may control the second movable contact (contact 2) of the first switch S1 to be conducted with the static contact (contact 3) of the first switch S1, and control the second movable contact (contact 2*) of the second switch S2 to be conducted with the static contact (contact 3*) of the second switch S2, so that the isolating transfer switch switches to a second conducting state.

Optionally, to further ensure that the in-vehicle charge and discharge system can implement secure electrical isolation, a third switch S3 may be added to the in-vehicle charge and discharge system. As shown in FIG. 9, the cathode port of the low-voltage battery interface LV BAT is grounded together with the first converter 303 by using the third switch S3.

Correspondingly, when controlling the isolating transfer switch to switch to the first conducting state, the controller not only needs to control the first movable contact (contact 1) of the first switch S1 to be conducted with the static contact (contact 3) of the first switch S1 and control the first movable contact (contact 1*) of the second switch S2 to be conducted with the static contact (contact 3^{∗}) of the second switch S2, but also needs to control the third switch S3 to be disconnected; and when controlling the isolating transfer switch to switch to the second conducting state, the controller not only needs to control the second movable contact (contact 2) of the first switch S1 to be conducted with the static contact (contact 3) of the first switch S1 and control the second movable contact (contact 2*) of the second switch S2 to be conducted with the static contact (contact 3^{∗}) of the second switch S2, but also needs to control the third switch S3 to be closed.

Optionally, when the in-vehicle charge and discharge system includes the first switch S 1 and the second switch S2, or includes the first switch S1, the second switch S2, and the third switch S3 at the same time, the first converter 303 in the in-vehicle charge and discharge system may be specifically in a converter structure shown in FIG. 9 and includes: a first inductor L1, a second inductor L2, a first switch tube Q1, a second switch tube Q2, a third switch tube Q3, and a fourth switch tube Q4. The first port of the first converter 303 specifically includes a first access point A and a second access point B; and a second port of the first converter 303 specifically includes a third access point C and a fourth access point D.

The first switch tube Q1 and the second switch tube Q2 are connected in series to form a first bridge arm, the third switch tube Q3 and the fourth switch tube Q4 are connected in series to form a second bridge arm, the first bridge arm and the second bridge arm are connected in parallel to each other to the third access point C and the fourth access point D, where the third access point C is a ground point of the first converter 303. One terminal of the alternating current interface AC is connected to the first movable contact (contact 1) of the first switch S1, and the other terminal of the alternating current interface AC is connected to the first movable contact (contact 1*) of the second switch S2; the static contact (contact 3) of the first switch S1 is connected to the first access point A of the first converter 303, and the first access point A is connected to a middle point of the first bridge arm by using the first inductor L1; and the static contact (contact 3*) of the second switch S2 is connected to the second access point B of the first converter 303, and the second access point is connected to a middle point of the second bridge arm by using the second inductor L2. The anode port of the low-voltage battery interface LV BAT is connected to the common point M. When the in-vehicle charge and discharge system does not include the third switch S3, the cathode port of the low-voltage battery interface LV BAT is directly connected to the third access point C of the first converter 303. When the in-vehicle charge and discharge system includes the third switch S3, the cathode port of the low-voltage battery interface LV BAT is connected to the third access point C of the first converter 303 by using the third switch S3.

When the first converter 303 is in the foregoing converter structure, the controller may specifically control a working mode of the first converter 303 in the following manner:

When the in-vehicle charge and discharge system includes the first switch S1 and the second switch S2, and does not include the third switch S3, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, and when the first movable contact (contact 1*) of the second switch S2 is conducted with the static contact (contact 3*) of the second switch S2, so that the first converter 303 works in a PFC mode or an inverting mode; and the controller controls switch-on and switch-off of the first switch tube Q1 and the second switch tube Q2 in a first parallel branch and controls switch-on and switch-off of the third switch tube Q3 and the fourth switch tube Q4 in a second parallel branch when the second movable contact (contact 2) of the first switch S1 is conducted with the static contact (contact 3) of the first switch S1 and when the second movable contact (contact 2^{∗}) of the second switch S2 is conducted with the static contact (contact 3^{∗}) of the second switch S2, so that the first converter 303 works in a parallel boost mode or a parallel buck mode, where the first parallel branch specifically includes the first inductor L1, the first switch tube Q1, and the second switch tube Q2; and the second parallel branch specifically includes the second inductor L2, the third switch tube Q3, and the fourth switch tube Q4.

When the in-vehicle charge and discharge system includes the first switch S1, the second switch S2, and the third switch S3 at the same time, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, when the first movable contact (contact 1*) of the second switch S2 is conducted with the static contact (contact 3^{∗}) of the second switch S2, and when the third switch S3 is disconnected, so that the first converter 303 works in the PFC mode or the inverting mode; and the controller controls switch-on and switch-off of the first switch tube Q1 and the second switch tube Q2 in the first parallel branch and controls switch-on and switch-off of the third switch tube Q3 and the fourth switch tube Q4 in the second parallel branch when the second movable contact (contact 2) of the first switch S1 is conducted with the static contact (contact 3) of the first switch S1, when the second movable contact (contact 2*) of the second switch S2 is conducted with the static contact (contact 3^{∗}) of the second switch S2, and when the third switch S3 is closed, so that the first converter 303 works in the parallel boost mode or the parallel buck mode, where the first parallel branch specifically includes the first inductor L1, the first switch tube Q1, and the second switch tube Q2; and the second parallel branch specifically includes the second inductor L2, the third switch tube Q3, and the fourth switch tube Q4.

In this way, in an energy transmission process, the switch tubes in the first converter 303 are all multiplexed, and energy transmission efficiency is improved.

It should be understood that, the circuit structure of the first converter 303 shown in FIG. 9 is merely an example. In actual application, a converter in another circuit structure may alternatively be used as the first converter 303. A structure of the first converter 303 is not specifically limited herein in this application.

Optionally, to ensure secure electrical isolation of the in-vehicle charge and discharge system, the second converter 304 in the in-vehicle charge and discharge system may include a first power conversion circuit, an isolation transformer, and a second power conversion circuit. The first power conversion circuit is configured to: invert an input direct current into an alternating current, or rectify an input alternating current into a direct current under control of the controller. The second power conversion circuit is configured to: rectify an input alternating current into a direct current, or invert an input direct current into an alternating current under control of the controller. The isolation transformer is configured to: isolate and transform an alternating current of an input terminal of the isolation transformer to an output terminal of the isolation transformer. For details about a circuit structure of the second converter 304, refer to the second converter 304 shown in FIG. 8, and the circuit structure of the second converter 304 is not described in detail herein again.

When the isolating transfer switch switches to the first conducting state or the second conducting state, the controller controls switch-on and switch-off of the switch tubes in the first power conversion circuit and the second power conversion circuit, so that the second converter 304 works in a DCDC isolating conversion mode.

Optionally, to improve working performance of the in-vehicle charge and discharge system, one or more energy storage units may be further added to the in-vehicle charge and discharge system. As shown in FIG. 9, the in-vehicle charge and discharge system may further include a first capacitor C1, a second capacitor C2, and a third capacitor C3. The first capacitor C1 is connected in parallel to the low-voltage battery interface LV BAT. The second capacitor C2 is disposed between the first converter 303 and the second converter 304, and is connected in parallel to both the first converter 303 and the second converter 304. The third capacitor C3 is connected in parallel to the high-voltage battery interface HV BAT. The first capacitor C1, the second capacitor C2, and the third capacitor C3 are used as intermediate energy storage units, to store energy in an energy transmission process.

It should be understood that, in actual application, several capacitors may be disposed in the in-vehicle charge and discharge system as energy storage units based on an actual requirement. A quantity of the energy storage units disposed in the in-vehicle charge and discharge system is not limited herein in this application.

The following describes a working principle of the in-vehicle charge and discharge system shown in FIG. 9 in actual application with reference to the in-vehicle charge and discharge system shown in FIG. 9.

When the alternating current interface AC (which may be understood as an alternating current power supply connected to the alternating current interface AC) transmits energy to the high-voltage battery interface HV BAT (which may be understood as a high-voltage battery connected to the high-voltage battery interface HV BAT), when the in-vehicle charge and discharge system includes only the first switch S1 and the second switch S2, the controller controls the first movable contact (contact 1) of the first switch S1 to be conducted with the static contact (contact 3) of the first switch S1, and controls the first movable contact (contact 1*) of the second switch S2 to be conducted with the static contact (contact 3^{∗}) of the second switch S2; and when the in-vehicle charge and discharge system includes the first switch S1, the second switch S2, and the third switch S3 at the same time, the controller controls the first movable contact (contact 1) of the first switch S1 to be conducted with the static contact (contact 3) of the first switch S1, controls the first movable contact (contact 1*) of the second switch S2 to be conducted with the static contact (contact 3*) of the second switch S2, and controls the third switch S3 to be disconnected.

At the same time, the controller controls switch-on and switch-off of the first switch tube Q1, the second switch tube Q2, the third switch tube Q3, and the fourth switch tube Q4 in the first converter 303, so that the first converter 303 works in the PFC mode, and energy is transmitted from the alternating current interface AC to the intermediate energy storage unit second capacitor C2. The controller controls the second converter 304, to enable the second converter 304 to work in the DCDC isolating conversion mode. Specifically, the controller controls switch-on and switch-off of the switch tubes in the first power conversion circuit and the second power conversion circuit, so that the first power conversion circuit inverts the input direct current into the alternating current, and after the isolation transformer isolates and transforms the alternating current to an input terminal of the second power conversion circuit, the second power conversion circuit rectifies the alternating current into the direct current, and the direct current is transmitted, by using the third capacitor C3, to the high-voltage battery connected to the high-voltage battery interface HV BAT.

When the high-voltage battery interface HV BAT (which may be understood as the high-voltage battery connected to the high-voltage battery interface HV BAT) transmits energy to the alternating current interface AC (which may be understood as an alternating current load connected to the alternating current interface AC), when the in-vehicle charge and discharge system includes only the first switch S1 and the second switch S2, the controller controls the first movable contact (contact 1) of the first switch S1 to be conducted with the static contact (contact 3) of the first switch S1, and controls the first movable contact (contact 1*) of the second switch S2 to be conducted with the static contact (contact 3^{∗}) of the second switch S2; and when the in-vehicle charge and discharge system includes the first switch S1, the second switch S2, and the third switch S3 at the same time, the controller controls the first movable contact (contact 1) of the first switch S1 to be conducted with the static contact (contact 3) of the first switch S1, controls the first movable contact (contact 1*) of the second switch S2 to be conducted with the static contact (contact 3*) of the second switch S2, and controls the third switch S3 to be disconnected.

At the same time, the controller controls the second converter 304, to enable the second converter 304 to work in the DCDC isolating conversion mode. Specifically, the controller controls switch-on and switch-off of the switch tubes in the first power conversion circuit and the second power conversion circuit, so that the second power conversion circuit inverts the direct current input by the high-voltage battery interface HV BAT by using the third capacitor C3 into the alternating current, and after the isolation transformer isolates and transforms the alternating current to an input terminal of the first power conversion circuit, the first power conversion circuit rectifies the alternating current into the direct current, and the direct current is transmitted to the intermediate energy storage unit second capacitor C2. The controller controls switch-on and switch-off of the first switch tube Q1, the second switch tube Q2, the third switch tube Q3, and the fourth switch tube Q4 in the first converter 303, so that the first converter 303 works in the inverting mode, inverts the direct current stored in the second capacitor C2 into the alternating current, and transmits the alternating current to the alternating current load connected to the alternating current interface AC.

When the high-voltage battery interface HV BAT (which may be understood as the high-voltage battery connected to the high-voltage battery interface HV BAT) transmits energy to the low-voltage battery interface LV BAT (which may be understood as a low-voltage battery connected to the low-voltage battery interface LV BAT), when the in-vehicle charge and discharge system includes only the first switch S1 and the second switch S2, the controller controls the second movable contact (contact 2) of the first switch S1 to be conducted with the static contact (contact 3) of the first switch S1, and controls the second movable contact (contact 2*) of the second switch S2 to be conducted with the static contact (contact 3^{∗}) of the second switch S2; and when the in-vehicle charge and discharge system includes the first switch S1, the second switch S2, and the third switch S3 at the same time, the controller controls the second movable contact (contact 2) of the first switch S1 to be conducted with the static contact (contact 3) of the first switch S1, controls the second movable contact (contact 2*) of the second switch S2 to be conducted with the static contact (contact 3^{∗}) of the second switch S2, and controls the third switch S3 to be closed.

At the same time, the controller controls the second converter 304, to enable the second converter 304 to work in the DCDC isolating conversion mode. Specifically, the controller controls switch-on and switch-off of the switch tubes in the first power conversion circuit and the second power conversion circuit, so that the second power conversion circuit inverts the direct current input by the high-voltage battery interface HV BAT by using the third capacitor C3 into the alternating current, and after the isolation transformer isolates and transforms the alternating current to an input terminal of the first power conversion circuit, the first power conversion circuit rectifies the alternating current into the direct current, and the direct current is transmitted to the intermediate energy storage unit second capacitor C2. The controller controls switch-on and switch-off of the first switch tube Q1 and the second switch tube Q2 in the first parallel branch in the first converter 303, and controls switch-on and switch-off of the third switch tube Q3 and the fourth switch tube Q4 in the second parallel circuit in the first converter 303, so that the first converter 303 works in the parallel buck mode, performs direct current buck processing on the direct current stored in the second capacitor C2, and transmits the direct current on which the direct current buck processing is performed to the low-voltage battery connected to the low-voltage battery interface LV BAT.

When the low-voltage battery interface LV BAT (which may be understood as the low-voltage battery connected to the low-voltage battery interface LV BAT) transmits energy to the high-voltage battery interface HV BAT (which may be understood as the high-voltage battery connected to the high-voltage battery interface HV BAT), when the in-vehicle charge and discharge system includes only the first switch S1 and the second switch S2, the controller controls the second movable contact (contact 2) of the first switch S1 to be conducted with the static contact (contact 3) of the first switch S1, and controls the second movable contact (contact 2*) of the second switch S2 to be conducted with the static contact (contact 3^{∗}) of the second switch S2; and when the in-vehicle charge and discharge system includes the first switch S1, the second switch S2, and the third switch S3 at the same time, the controller controls the second movable contact (contact 2) of the first switch S1 to be conducted with the static contact (contact 3) of the first switch S1, controls the second movable contact (contact 2*) of the second switch S2 to be conducted with the static contact (contact 3^{∗}) of the second switch S2, and controls the third switch S3 to be closed.

At the same time, the controller controls switch-on and switch-off of the first switch tube Q1 and the second switch tube Q2 in the first parallel branch in the first converter 303, and controls switch-on and switch-off of the third switch tube Q3 and the fourth switch tube Q4 in the second parallel branch in the first converter 303, so that the first converter 303 works in the parallel boost mode, performs direct current boost processing on the direct current input by the low-voltage battery interface LV BAT by using the first capacitor C1, and transmits the direct current on which the direct current boost processing is performed to the intermediate energy storage unit second capacitor C2. The controller controls the second converter 304, to enable the second converter 304 to work in the DCDC isolating conversion mode. Specifically, the controller controls switch-on and switch-off of the switch tubes in the first power conversion circuit and the second power conversion circuit, so that the first power conversion circuit inverts the input direct current into the alternating current, and after the isolation transformer isolates and transforms the alternating current to an input terminal of the second power conversion circuit, the second power conversion circuit rectifies the alternating current into the direct current, and the direct current is transmitted, by using the third capacitor C3, to the high-voltage battery connected to the high-voltage battery interface HV BAT.

In the foregoing in-vehicle charge and discharge system, the controller controls conducting statuses of the first switch S1 and the second switch S2, or controls conducting statuses of the first switch S1, the second switch S2, and the third switch S3, to implement time division multiplexing of power conversion circuits, to be specific, enable the first converter 303 and the second converter 304 to be multiplexed in different energy transmission processes. Therefore, a quantity of converters that need to be disposed in the in-vehicle charge and discharge system can be effectively reduced, to reduce a size of the in-vehicle charge and discharge system, thereby reducing production costs. The in-vehicle charge and discharge system shown in FIG. 9 can implement full multiplexing of the switch tubes in the power conversion circuits, and effectively improve energy transmission efficiency. In addition, the third switch S3 and the second converter 304 are disposed, so that electrical isolation between various power supplies can be effectively implemented, to ensure security and reliability of the in-vehicle charge and discharge system.

### METHOD EMBODIMENT 1

Based on the in-vehicle charge and discharge system provided in the foregoing embodiments, an embodiment of this application further provides an in-vehicle charge and discharge control method applied to a controller. The controller is configured to control an in-vehicle charge and discharge circuit, and the in-vehicle charge and discharge circuit includes: an alternating current interface, an isolating transfer switch, a first converter, a second converter, a high-voltage battery interface, and a low-voltage battery interface in System Embodiments 1 to 3.

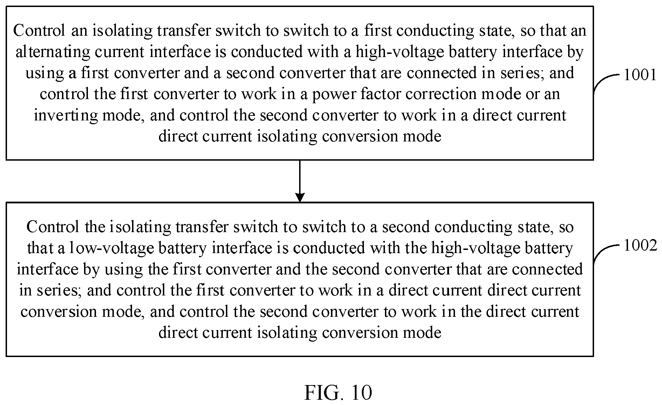

FIG. 10 is a schematic flowchart of an in-vehicle charge and discharge control method according to an embodiment of this application. The method includes the following steps.

Step 1001: Control the isolating transfer switch to switch to a first conducting state, so that the alternating current interface is conducted with the high-voltage battery interface by using the first converter and the second converter that are connected in series; and control the first converter to work in a PFC mode or an inverting mode, and control the second converter to work in a DCDC isolating conversion mode.

When an alternating current power supply connected to the alternating current interface charges a high-voltage battery connected to the high-voltage battery interface, the controller controls the isolating transfer switch to switch to the first conducting state. In this case, the alternating current interface (which may alternatively be understood as the alternating current power supply), the first converter, the second converter, and the high-voltage battery interface (which may alternatively be understood as the high-voltage battery) are sequentially connected in series. At the same time, to ensure normal transmission of energy, the controller needs to control the first converter to work in the PFC mode and control the second converter to work in the DCDC isolating conversion mode.

When the high-voltage battery connected to the high-voltage battery interface supplies power to an alternating current load connected to the alternating current interface, the controller controls the isolating transfer switch to switch to the first conducting state. In this case, the alternating current interface (which may alternatively be understood as the alternating current load), the first converter, the second converter, and the high-voltage battery interface (which may alternatively be understood as the high-voltage battery) are sequentially connected in series. At the same time, to ensure normal transmission of energy, the controller needs to control the first converter to work in the inverting mode and control the second converter to work in the DCDC isolating conversion mode.

Step 1002: Control the isolating transfer switch to switch to a second conducting state, so that the low-voltage battery interface is conducted with the high-voltage battery interface by using the first converter and the second converter that are connected in series; and control the first converter to work in a direct current direct current conversion mode, and control the second converter to work in the direct current direct current isolating conversion mode.

When the high-voltage battery connected to the high-voltage battery interface charges a low-voltage battery connected to the low-voltage battery interface, the controller controls the isolating transfer switch to switch to the second conducting state. In this case, the low-voltage battery interface (which may alternatively be understood as the low-voltage battery), the first converter, the second converter, and the high-voltage battery interface (which may alternatively be understood as the high-voltage battery) are sequentially connected in series. At the same time, to ensure normal transmission of energy, the controller needs to control the first converter to work in a buck mode, and control the second converter to work in the DCDC isolating conversion mode.

When the low-voltage battery connected to the low-voltage battery interface transmits energy to the high-voltage battery connected to the high-voltage battery interface, the controller controls the isolating transfer switch to switch to the second conducting state. In this case, the low-voltage battery interface (which may alternatively be understood as the low-voltage battery), the first converter, the second converter, and the high-voltage battery interface (which may alternatively be understood as the high-voltage battery) are sequentially connected in series. At the same time, to ensure normal transmission of energy, the controller needs to control the first converter to work in the boost mode and control the second converter to work in the DCDC isolating conversion mode.

Optionally, the in-vehicle charge and discharge circuit may be connected in the connection manner shown in FIG. 3: The alternating current interface 301 is connected to a first terminal of the isolating transfer switch 302, the low-voltage battery interface 306 is connected to a second terminal of the isolating transfer switch 302, and a third terminal of the isolating transfer switch 302, the first converter 303, the second converter 304, and the high-voltage battery interface 305 are sequentially connected in series.

In this case, if energy needs to be transmitted between the alternating current interface 301 and the high-voltage battery interface 305, the controller may control the first terminal of the isolating transfer switch 302 to be conducted with the third terminal of the isolating transfer switch 302, so that the isolating transfer switch switches to the first conducting state, and the alternating current interface is sequentially connected in series to the first converter 303, the second converter 304, and the high-voltage battery interface 305 by using the isolating transfer switch 302. If energy needs to be transmitted between the low-voltage battery interface 306 and the high-voltage battery interface 305, the controller may control the second terminal of the isolating transfer switch 302 to be conducted with the third terminal of the isolating transfer switch 302, so that the isolating transfer switch 302 switches to the second conducting state, and the low-voltage battery interface 306 is sequentially connected in series to the first converter 303, the second converter 304, and the high-voltage battery interface 305 by using the isolating transfer switch 302.

Optionally, the isolating transfer switch 302 may specifically include a first switch S1, and a corresponding circuit structure is shown in FIG. 8. One terminal of the alternating current interface AC is connected to a first movable contact (contact 1) of the first switch S1, and the other terminal of the alternating current interface AC is connected to a first port of the first converter 303; an anode port of the low-voltage battery interface LV BAT is connected to a second movable contact (contact 2) of the first switch S1, and a cathode port of the low-voltage battery interface LV BAT is grounded; and a static contact (contact 3) of the first switch S1 is connected to the first port of the first converter 303.

In this case, the controller may control the first movable contact (contact 1) of the first switch S1 to be conducted with the static contact (contact 3) of the first switch S 1, so that the isolating transfer switch switches to the first conducting state; and may control the second movable contact (contact 2) of the first switch to be conducted with the static contact (contact 3) of the first switch, so that the isolating transfer switch switches to the second conducting state.

Furthermore, on the basis that the isolating transfer switch includes the first switch, to further ensure that the in-vehicle charge and discharge system can implement secure electrical isolation, a third switch S3 may be added to the in-vehicle charge and discharge circuit, and the cathode port of the low-voltage battery interface LV BAT is grounded by using the third switch S3.

Correspondingly, when controlling the isolating transfer switch to switch to the first conducting state, the controller not only needs to control the first movable contact (contact 1) of the first switch S1 to be conducted with the static contact (contact 3) of the first switch S1, but also needs to control the third switch S3 to be disconnected; and when controlling the isolating transfer switch to switch to the second conducting state, the controller not only needs to control the second movable contact (contact 2) of the first switch S1 to be conducted with the static contact (contact 3) of the first switch S1, but also needs to control the third switch S3 to be closed.

On the basis that the isolating transfer switch includes the first switch S1, the first converter 303 may include a first inductor L1, a first switch tube Q1, a second switch tube Q2, a third switch tube Q3, and a fourth switch tube Q4. The first port of the first converter 303 includes a first access point A and a second access point B; and a second port of the first converter 303 includes a third access point C and a fourth access point D. The first switch tube Q1 and the second switch tube Q2 are connected in series to form a first bridge arm, the third switch tube Q3 and the fourth switch tube Q4 are connected in series to form a second bridge arm, and the first bridge arm and the second bridge arm are connected in parallel to each other to the third access point C and the fourth access point D; the static contact (contact 3) of the first switch S1 is connected to the first access point A, and the first access point A is connected to a middle point of the first bridge arm by using the first inductor L1; the other terminal of the alternating current interface AC is connected to a middle point of the second bridge arm by using the second access point B; and the cathode port of the low-voltage battery interface LV BAT is connected to the third access point C.

For the first converter 303, the controller may specifically control a working mode of the first converter 303 in the following manner:
When the in-vehicle charge and discharge system includes the first switch S1 and does not include the third switch S3, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, so that the first converter 303 works in a PFC mode or an inverting mode; and controls switch-on and switch-off of the first switch tube Q1 and the second switch tube Q2 when the second movable contact (contact 2) of the first switch S1 is conducted with the static contact (contact 3) of the first switch S 1, so that the first inductor L1, the first switch tube Q1, and the second switch tube Q2 in the first converter 303 work in a boost mode or a buck mode, to be specific, the first converter 303 works in the boost mode or the buck mode. In this case, both the third switch tube Q3 and the fourth switch tube Q4 in the first converter 303 are in a switch-off state.

When the in-vehicle charge and discharge system includes both the first switch S1 and the third switch S3, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, and when the third switch S3 is disconnected, so that the first converter 303 works in a PFC mode or an inverting mode; and controls switch-on and switch-off of the first switch tube Q1 and the second switch tube Q2 when the second movable contact (contact 2) of the first switch S1 is conducted with the static contact (contact 3) of the first switch S1 and when the third switch S3 is closed, so that the first inductor L1, the first switch tube Q1, and the second switch tube Q2 in the first converter 303 work in a boost mode or a buck mode, to be specific, the first converter 303 works in the boost mode or the buck mode. In this case, both the third switch tube Q3 and the fourth switch tube Q4 in the first converter 303 are in a switch-off state.

Optionally, the isolating transfer switch may specifically include the first switch S1 and a second switch S2, and corresponding circuit structures are shown in FIG. 9. One terminal of the alternating current interface AC is connected to the first movable contact (contact 1) of the first switch S1, and the other terminal of the alternating current interface AC is connected to a first movable contact (contact 1*) of the second switch S2; the anode port of the low-voltage battery interface LV BAT is connected to a common point, where the common point is a connection point between the second movable contact (contact 2) of the first switch S1 and a second movable contact (contact 2^{∗}) of the second switch S2; the cathode port of the low-voltage battery interface LV BAT is grounded, and usually, the cathode port of the low-voltage battery interface LV BAT may be grounded together with the first converter 303; and the static contact (contact 3) of the first switch and a static contact (contact 3^{∗}) of the second switch S2 are connected to the first port of the first converter 303.

In this case, the controller may specifically control the first movable contact (contact 1) of the first switch S1 to be conducted with the static contact (contact 3) of the first switch S1, and control the first movable contact (contact 1*) of the second switch S2 to be conducted with the static contact (contact 3^{∗}) of the second switch S2, so that the isolating transfer switch switches to the first conducting state; and may control the second movable contact (contact 2) of the first switch S1 to be conducted with the static contact (contact 3) of the first switch S1, and control the second movable contact (contact 2^{∗}) of the second switch S2 to be conducted with the static contact (contact 3 *) of the second switch S2, so that the isolating transfer switch switches to the second conducting state.

Furthermore, on the basis that the isolating transfer switch includes the first switch S1 and the second switch S2, to further ensure that the in-vehicle charge and discharge system can implement secure electrical isolation, a third switch S3 may be added to the in-vehicle charge and discharge circuit, and the cathode port of the low-voltage battery interface LV BAT is grounded by using the third switch S3.

Correspondingly, when controlling the isolating transfer switch to switch to the first conducting state, the controller not only needs to control the first movable contact (contact 1) of the first switch S1 to be conducted with the static contact (contact 3) of the first switch S1 and control the first movable contact (contact 1*) of the second switch S2 to be conducted with the static contact (contact 3^{∗}) of the second switch S2, but also needs to control the third switch S3 to be disconnected; and when controlling the isolating transfer switch to switch to the second conducting state, the controller not only needs to control the second movable contact (contact 2) of the first switch S1 to be conducted with the static contact (contact 3) of the first switch S1 and controls the second movable contact (contact 2*) of the second switch S2 to be conducted with the static contact (contact 3^{∗}) of the second switch S2, but also needs to control the third switch S3 to be closed.

On the basis that the isolating transfer switch includes the first switch S 1 and the second switch S2, the first converter 303 may include a first inductor L1, a second inductor L2, a first switch tube Q1, a second switch tube Q2, a third switch tube Q3, and a fourth switch tube Q4; the first port of the first converter 303 includes a first access point A and a second access point B; and a second port of the first converter 303 includes a third access point C and a fourth access point D. The first switch tube Q1 and the second switch tube Q2 are connected in series to form a first bridge arm, the third switch tube Q3 and the fourth switch tube Q4 are connected in series to form a second bridge arm, and the first bridge arm and the second bridge arm are connected in parallel to each other to the third access point C and the fourth access point D. The static contact (contact 3) of the first switch is connected to the first access point A, and the first access point A is connected to a middle point of the first bridge arm by using the first inductor L1; the static contact (contact 3 *) of the second switch is connected to the second access point B, and the second access point B is connected to a middle point of the fourth bridge arm by using the second inductor L2; and the cathode port of the low-voltage battery interface LV BAT is connected to the third access point C.

For the first converter 303, the controller may specifically control a working mode of the first converter 303 in the following manner:
When the in-vehicle charge and discharge system includes the first switch S 1 and the second switch S2, and does not include the third switch S3, the controller controls switch-on and switch-off of the first switch tube Q1, the second switch tube Q2, the third switch tube Q3, and the fourth switch tube Q4 when the first movable contact (contact 1) of the first switch is conducted with the static contact (contact 3) of the first switch, and when the first movable contact (contact 1*) of the second switch S2 is conducted with the static contact (contact 3^{∗}) of the second switch S2, so that the first converter 303 works in the PFC mode or the inverting mode; and the controller controls switch-on and switch-off of the first switch tube Q1 and the second switch tube Q2 in a first parallel branch and controls switch-on and switch-off of the third switch tube Q3 and the fourth switch tube Q4 in a second parallel branch when the second movable contact (contact 2) of the first switch S1 is conducted with the static contact (contact 3) of the first switch S1, and when the second movable contact (contact 2*) of the second switch S2 is conducted with the static contact (contact 3^{∗}) of the second switch S2, so that the first converter 303 works in a parallel boost mode or a parallel buck mode, where the first parallel branch specifically includes the first inductor L1, the first switch tube Q1, and the second switch tube Q2; and the second parallel branch specifically includes the second inductor L2, the third switch tube Q3, and the fourth switch tube Q4.

When the in-vehicle charge and discharge system includes the first switch S1, the second switch S2, and the third switch S3 at the same time, the controller controls switch-on and switch-off of the first switch tube Q1, the second switch tube Q2, the third switch tube Q3, and the fourth switch tube Q4 when the first movable contact (contact 1) of the first switch S1 is conducted with the static contact (contact 3) of the first switch S1, when the first movable contact (contact 1*) of the second switch S2 is conducted with the static contact (contact 3^{∗}) of the second switch S2, and when the third switch S3 is disconnected, so that the first converter 303 works in the PFC mode or the inverting mode; and the controller controls switch-on and switch-off of the first switch tube Q1 and the second switch tube Q2 in the first parallel branch and controls switch-on and switch-off of the third switch tube Q3 and the fourth switch tube Q4 in the second parallel branch when the second movable contact (contact 2) of the first switch S1 is conducted with the static contact (contact 3) of the first switch S1, when the second movable contact (contact 2*) of the second switch S2 is conducted with the static contact (contact 3^{∗}) of the second switch S2, and when the third switch S3 is closed, so that the first converter 303 works in the parallel boost mode or the parallel buck mode.

In the foregoing in-vehicle charge and discharge control method, the controller switches a conducting status of the isolating transfer switch, to implement time division multiplexing of power conversion circuits. To be specific, when the isolating transfer switch switches to the first conducting state, energy transmission between the alternating current interface and the high-voltage battery interface is implemented by using the first converter and the second converter; and when the isolating transfer switch switches to the second conducting state, energy transmission between the low-voltage battery interface and the high-voltage battery interface is implemented by using the first converter and the second converter. Because the first converter and the second converter can be multiplexed in different energy transmission processes, a quantity of converters that need to be disposed in the in-vehicle charge and discharge system can be effectively reduced, to reduce a size of the in-vehicle charge and discharge system, thereby reducing production costs. In addition, the isolating transfer switch and the second converter are disposed, so that electrical isolation between various power supplies can be effectively implemented, to ensure security and reliability of the in-vehicle charge and discharge system.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a computer software product. The computer software product is stored in a storage medium and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (English full name: Read-Only Memory, ROM for short), a random access memory (English full name: Random Access Memory, RAM for short), a magnetic disk, or an optical disc.

## Claims

1. An in-vehicle charge and discharge system, wherein the system comprises: an alternating current interface (301), an isolating transfer switch (302), a first converter (303), a second converter (304), a high-voltage battery interface (305), a low-voltage battery interface (306), and a controller (307), wherein
the controller (307) is configured to: control the isolating transfer switch (302) to switch to a first conducting state, so that the alternating current interface (301) is conducted with the high-voltage battery interface (305) by using the first converter (303) and the second converter (304) that are connected in series; and control the first converter (303) to work in a power factor correction mode or an inverting mode, and control the second converter (304) to work in a direct current direct current isolating conversion mode; and
the controller (307) is further configured to: control the isolating transfer switch (302) to switch to a second conducting state, so that the low-voltage battery interface (306) is conducted with the high-voltage battery interface (305) by using the first converter (303) and the second converter (304) that are connected in series; and control the first converter (303) to work in a direct current direct current conversion mode, and control the second converter (304) to work in the direct current direct current isolating conversion mode.

2. The in-vehicle charge and discharge system according to claim 1,
wherein the alternating current interface (301) is connected to a first terminal of the isolating transfer switch (302), the low-voltage battery interface (306) is connected to a second terminal of the isolating transfer switch (302), and a third terminal of the isolating transfer switch (302), the first converter (303), the second converter (304), and the high-voltage battery interface (305) are sequentially connected in series

3. The in-vehicle charge and discharge system according to claim 2,
wherein the isolating transfer switch (302) comprises a first switch, wherein
one terminal of the alternating current interface (301) is connected to a first movable contact of the first switch, and the other terminal of the alternating current interface (301) is connected to a first port of the first converter (303); an anode port of the low-voltage battery interface (306) is connected to a second movable contact of the first switch, and a cathode port of the low-voltage battery interface (306) is grounded; and a static contact of the first switch is connected to the first port of the first converter (303).

4. The in-vehicle charge and discharge system according to claim 3,
wherein the first converter (303) comprises a first inductor, a first switch tube, a second switch tube, a third switch tube, and a fourth switch tube; the first port of the first converter (303) comprises a first access point and a second access point; and a second port of the first converter (303) comprises a third access point and a fourth access point;
the first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point; and
the static contact of the first switch is connected to the first access point, the first access point is connected to a middle point of the first bridge arm by using the first inductor; the other terminal of the alternating current interface (301) is connected to a middle point of the second bridge arm by using the second access point; and the cathode port of the low-voltage battery interface (306) is connected to the third access point.

5. The in-vehicle charge and discharge system according to claim 3,
wherein the isolating transfer switch (302) further comprises a second switch, wherein
one terminal of the alternating current interface (301) is connected to the first movable contact of the first switch, and the other terminal of the alternating current interface (301) is connected to a first movable contact of the second switch; the anode port of the low-voltage battery interface (306) is connected to a common point, wherein the common point is a connection point between the second movable contact of the first switch and a second movable contact of the second switch; the cathode port of the low-voltage battery interface (306) is grounded; and the static contact of the first switch and a static contact of the second switch are connected to the first port of the first converter (303).

6. The in-vehicle charge and discharge system according to claim 5,
wherein the first converter (303) comprises a first inductor, a second inductor, a first switch tube, a second switch tube, a third switch tube, and a fourth switch tube; the first port of the first converter (303) comprises a first access point and a second access point; and a second port of the second converter (304) comprises a third access point and a fourth access point;
the first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point; and
the static contact of the first switch is connected to the first access point, and the first access point is connected to a middle point of the first bridge arm by using the first inductor; the static contact of the second switch is connected to the second access point, and the second access point is connected to a middle point of the second bridge arm by using the second inductor; and the cathode port of the low-voltage battery interface (306) is connected to the third access point.

7. The in-vehicle charge and discharge system according to claim 3 or 5,
wherein the system further comprises a third switch, wherein
the cathode port of the low-voltage battery interface (306) is grounded by using the third switch

8. The in-vehicle charge and discharge system according to any one of claims 1 to 7,
wherein the second converter (304) comprises a first power conversion circuit, an isolation transformer, and a second power conversion circuit, wherein
the first power conversion circuit is configured to: invert an input direct current into an alternating current, or rectify an input alternating current into a direct current under control of the controller (307);
the second power conversion circuit is configured to: rectify an input alternating current into a direct current, or invert an input direct current into an alternating current under control of the controller (307); and
the isolation transformer is configured to: isolate and transform an alternating current of an input terminal to an output terminal.

9. The in-vehicle charge and discharge system according to any one of claims 1 to 7,
wherein the system further comprises a first capacitor, a second capacitor, and a third capacitor, wherein
the first capacitor is connected in parallel to the low-voltage battery interface (306); the second capacitor is disposed between the first converter (303) and the second converter (304), and is connected in parallel to the first converter (303); and the third capacitor is connected in parallel to the high-voltage battery interface (305).

10. An in-vehicle charge and discharge control method, applied to a controller (307), wherein the controller (307) is configured to control an in-vehicle charge and discharge circuit, and the in-vehicle charge and discharge circuit comprises: an alternating current interface (301), an isolating transfer switch (302), a first converter (303), a second converter (304), a high-voltage battery interface (305), and a low-voltage battery interface (306); and the method comprises:
controlling (1001) the isolating transfer switch (302) to switch to a first conducting state, so that the alternating current interface (301) is conducted with the high-voltage battery interface (305) by using the first converter (303) and the second converter (304) that are connected in series; and controlling the first converter (303) to work in a power factor correction mode or an inverting mode, and controlling the second converter (304) to work in a direct current direct current isolating conversion mode; and
controlling (1002) the isolating transfer switch (302) to switch to a second conducting state, so that the low-voltage battery interface (306) is conducted with the high-voltage battery interface (305) by using the first converter (303) and the second converter (304) that are connected in series; and controlling the first converter (303) to work in a direct current direct current conversion mode, and controlling the second converter (304) to work in the direct current direct current isolating conversion mode.

11. The in-vehicle charge and discharge control method according to claim 10,
wherein the alternating current interface (301) is connected to a first terminal of the isolating transfer switch (302), the low-voltage battery interface (306) is connected to a second terminal of the isolating transfer switch (302), and a third terminal of the isolating transfer switch (302), the first converter (303), the second converter (304), and the high-voltage battery interface (305) are sequentially connected in series;
the controlling the isolating transfer switch (302) to switch to a first conducting state comprises:
controlling the first terminal of the isolating transfer switch (302) to be conducted with the third terminal of the isolating transfer switch (302), so that the isolating transfer switch (302) switches to the first conducting state; and
the controlling the isolating transfer switch (302) to switch to a second conducting state comprises:
controlling the second terminal of the isolating transfer switch (302) to be conducted with the third terminal of the isolating transfer switch (302), so that the isolating transfer switch (302) switches to the second conducting state.

12. The in-vehicle charge and discharge control method according to claim 11,
wherein the isolating transfer switch (302) comprises a first switch, wherein
one terminal of the alternating current interface (301) is connected to a first movable contact of the first switch, and the other terminal of the alternating current interface (301) is connected to a first port of the first converter (303); an anode port of the low-voltage battery interface (306) is connected to a second movable contact of the first switch, and a cathode port of the low-voltage battery interface (306) is grounded; and a static contact of the first switch is connected to the first port of the first converter (303);
the controlling the isolating transfer switch (302) to switch to a first conducting state comprises:
controlling the first movable contact of the first switch to be conducted with the static contact of the first switch; and
the controlling the isolating transfer switch (302) to switch to a second conducting state comprises:
controlling the second movable contact of the first switch to be conducted with the static contact of the first switch

13. The in-vehicle charge and discharge control method according to claim 12,
wherein the first converter (303) comprises a first inductor, a first switch tube, a second switch tube, a third switch tube, and a fourth switch tube; the first port of the first converter (303) comprises a first access point and a second access point; and a second port of the first converter (303) comprises a third access point and a fourth access point;
the first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point; and
the static contact of the first switch is connected to the first access point, and the first access point is connected to a middle point of the first bridge arm by using the first inductor; the other terminal of the alternating current interface (301) is connected to a middle point of the second bridge arm by using the second access point; and the cathode port of the low-voltage battery interface (306) is connected to the third access point;
the controlling the first converter (303) to work in a power factor correction mode or an inverting mode comprises:
controlling switch-on and switch-off of the first switch tube, the second switch tube, the third switch tube, and the fourth switch tube when the first movable contact of the first switch is conducted with the static contact of the first switch, so that the first converter (303) works in the power factor correction mode or the inverting mode; and
the controlling the first converter (303) to work in a direct current direct current conversion mode comprises:
controlling switch-on and switch-off of the first switch tube and the second switch tube when the second movable contact of the first switch is conducted with the static contact of the first switch, so that the first converter (303) works in a direct current boost mode or a direct current buck mode.

14. The in-vehicle charge and discharge control method according to claim 12,
wherein the isolating transfer switch (302) further comprises a second switch, wherein
one terminal of the alternating current interface (301) is connected to the first movable contact of the first switch, and the other terminal of the alternating current interface (301) is connected to a first movable contact of the second switch; the anode port of the low-voltage battery interface (306) is connected to a common point, wherein the common point is a connection point between the second movable contact of the first switch and a second movable contact of the second switch; the cathode port of the low-voltage battery interface (306) is grounded; and the static contact of the first switch and a static contact of the second switch are connected to the first port of the first converter (303);
the controlling the isolating transfer switch (302) to switch to a first conducting state comprises:
controlling the first movable contact of the second switch to be conducted with the static contact of the second switch, and controlling a first movable contact of a third switch to be conducted with a static contact of the third switch; and
the controlling the isolating transfer switch (302) to switch to a second conducting state comprises:
controlling the second movable contact of the second switch to be conducted with the static contact of the second switch, and controlling a second movable contact of the third switch to be conducted with the static contact of the third switch

15. The in-vehicle charge and discharge control method according to claim 14,
wherein the first converter (303) comprises a first inductor, a second inductor, a first switch tube, a second switch tube, a third switch tube, and a fourth switch tube; the first port of the first converter (303) comprises a first access point and a second access point; and a second port of the second converter (304) comprises a third access point and a fourth access point;
the first switch tube and the second switch tube are connected in series to form a first bridge arm, the third switch tube and the fourth switch tube are connected in series to form a second bridge arm, and the first bridge arm and the second bridge arm are connected in parallel to each other to the third access point and the fourth access point; and
the static contact of the first switch is connected to the first access point, and the first access point is connected to a middle point of the first bridge arm by using the first inductor; the static contact of the second switch is connected to the second access point, and the second access point is connected to a middle point of the second bridge arm by using the second inductor; and the cathode port of the low-voltage battery interface (306) is connected to the third access point;
the controlling the first converter (303) to work in a power factor correction mode or an inverting mode comprises:
controlling switch-on and switch-off of the first switch tube, the second switch tube, the third switch tube, and the fourth switch tube when the first movable contact of the first switch is conducted with the static contact of the first switch, and when the first movable contact of the second switch is conducted with the static contact of the second switch, so that the first converter (303) works in the power factor correction mode or the inverting mode; and
the controlling the first converter (303) to work in a direct current direct current conversion mode comprises:
controlling switch-on and switch-off of the first switch tube and the second switch tube in a first parallel branch and controlling switch-on and switch-off of the third switch tube and the fourth switch tube in a second parallel branch when the second movable contact of the first switch is conducted with the static contact of the first switch and when the second movable contact of the second switch is conducted with the static contact of the second switch, so that the first converter (303) works in a direct current boost mode or a direct current buck mode, wherein the first parallel branch comprises the first inductor, the first switch tube, and the second switch tube; and the second parallel branch comprises the second inductor, the third switch tube, and the fourth switch tube

16. The in-vehicle charge and discharge control method according to claim 12 or 14,
wherein the in-vehicle charge and discharge circuit further comprises the third switch, and the cathode port of the low-voltage battery interface (306) is grounded by using the third switch;
the controlling the isolating transfer switch (302) to switch to a first conducting state comprises:
controlling the third switch to be disconnected when controlling the first movable contact of the first switch to be conducted with the static contact of the first switch or simultaneously controlling the first movable contact of the first switch to be conducted with the static contact of the first switch and controlling the first movable contact of the second switch to be conducted with the static contact of the second switch; and
the controlling the isolating transfer switch (302) to switch to a second conducting state comprises:
controlling the third switch to be closed when controlling the second movable contact of the first switch to be conducted with the static contact of the first switch or simultaneously controlling the second movable contact of the first switch to be conducted with the static contact of the first switch and controlling the second movable contact of the second switch to be conducted with the static contact of the second switch

## Patentansprüche

1. Fahrzeuginternes Lade- und Entladesystem, wobei das System Folgendes umfasst:
eine Wechselstromschnittstelle (301), einen isolierenden Transferschalter (302), einen ersten Wandler (303), einen zweiten Wandler (304), eine Hochspannungsbatterieschnittstelle (305), eine Niederspannungsbatterieschnittstelle (306) und eine Steuerung (307), wobei
die Steuerung (307) ausgelegt ist zum: Steuern des isolierenden Transferschalters (302) zum Schalten in einen ersten leitenden Zustand, sodass die Wechselstromschnittstelle (301) mit der Hochspannungsbatterieschnittstelle (305) leitend verbunden ist unter Verwendung des ersten Wandlers (303) und des zweiten Wandlers (304), die in Reihe verbunden sind; und Steuern des ersten Wandlers (303) zum Arbeiten in einem Leistungsfaktorkorrekturmodus oder einem Invertierungsmodus, und Steuern des zweiten Wandlers (304) zum Arbeiten in einem isolierenden Gleichstrom-Gleichstrom-Umwandlungsmodus; und
die Steuerung (307) ferner ausgelegt ist zum: Steuern des isolierenden Transferschalters (302) zum Schalten in einen zweiten leitenden Zustand, sodass die Niederspannungsbatterieschnittstelle (306) mit der Hochspannungsbatterieschnittstelle (305) leitend verbunden ist unter Verwendung des ersten Wandlers (303) und des zweiten Wandlers (304), die in Reihe verbunden sind; und Steuern des ersten Wandlers (303) zum Arbeiten in einem Gleichstrom-Gleichstrom-Umwandlungsmodus, und Steuern des zweiten Wandlers (304) zum Arbeiten in dem isolierenden Gleichstrom-Gleichstrom-Umwandlungsmodus.

2. Fahrzeuginternes Lade- und Entladesystem nach Anspruch 1,
wobei die Wechselstromschnittstelle (301) mit einem ersten Anschluss des isolierenden Transferschalters (302) verbunden ist, wobei die Niederspannungsbatterieschnittstelle (306) mit einem zweiten Anschluss des isolierenden Transferschalters (302) und einem dritten Anschluss des isolierenden Transferschalters (302) verbunden ist, wobei der erste Wandler (303), der zweite Wandler (304) und die Hochspannungsbatterieschnittstelle (305) sequenziell in Reihe verbunden sind.

3. Fahrzeuginternes Lade- und Entladesystem nach Anspruch 2,
wobei der isolierende Transferschalter (302) einen ersten Schalter umfasst, wobei
ein Anschluss der Wechselstromschnittstelle (301) mit einem ersten bewegbaren Kontakt des ersten Schalters verbunden ist und der andere Anschluss der Wechselstromschnittstelle (301) mit einem ersten Anschluss des ersten Wandlers (303) verbunden ist; ein Anodenanschluss der Niederspannungsbatterieschnittstelle (306) mit einem zweiten bewegbaren Kontakt des ersten Schalters verbunden ist, und ein Kathodenanschluss der Niederspannungsbatterieschnittstelle (306) geerdet ist; und wobei ein statischer Kontakt des ersten Schalters mit dem ersten Anschluss des ersten Wandlers (303) verbunden ist.

4. Fahrzeuginternes Lade- und Entladesystem nach Anspruch 3,
wobei der erste Wandler (303) einen ersten Induktor, eine erste Schaltröhre, eine zweite Schaltröhre, eine dritte Schaltröhre und eine vierte Schaltröhre umfasst; wobei der erste Anschluss des ersten Wandlers (303) einen ersten Zugangspunkt und einen zweiten Zugangspunkt umfasst, und wobei ein zweiter Anschluss des ersten Wandlers (303) einen dritten Zugangspunkt und einen vierten Zugangspunkt umfasst,
wobei die erste Schaltröhre und die zweite Schaltröhre in Reihe verbunden sind, um einen ersten Brückenarm zu bilden, wobei die dritte Schaltröhre und die vierte Schaltröhre in Reihe verbunden sind, um einen zweiten Brückenarm zu bilden, und wobei der erste Brückenarm und der zweite Brückenarm parallel miteinander mit dem dritten Zugangspunkt und dem vierten Zugangspunkt verbunden sind, und
wobei der statische Kontakt des ersten Schalters mit dem ersten Zugangspunkt verbunden ist, wobei der erste Zugangspunkt unter Verwendung des ersten Induktors mit einem Mittelpunkt des ersten Brückenarms verbunden ist; wobei der andere Anschluss der Wechselstromschnittstelle (301) unter Verwendung des zweiten Zugangspunkts mit einem Mittelpunkt des zweiten Brückenarms verbunden ist; und wobei der Kathodenanschluss der Niederspannungsbatterieschnittstelle (306) mit dem dritten Zugangspunkt verbunden ist.

5. Fahrzeuginternes Lade- und Entladesystem nach Anspruch 3,
wobei der isolierende Transferschalter (302) ferner einen zweiten Schalter umfasst, wobei
ein Anschluss der Wechselstromschnittstelle (301) mit dem ersten bewegbaren Kontakt des ersten Schalters verbunden ist und der andere Anschluss der Wechselstromschnittstelle (301) mit einem ersten bewegbaren Kontakt des zweiten Schalters verbunden ist; wobei der Anodenanschluss der Niederspannungsbatterieschnittstelle (306) mit einem gemeinsamen Punkt verbunden ist, wobei der gemeinsame Punkt ein Verbindungspunkt zwischen dem zweiten bewegbaren Kontakt des ersten Schalters und einem zweiten bewegbaren Kontakt des zweiten Schalters ist; wobei der Kathodenanschluss der Niederspannungsbatterieschnittstelle (306) geerdet ist; und wobei der statische Kontakt des ersten Schalters und ein statischer Kontakt des zweiten Schalters mit dem ersten Anschluss des ersten Wandlers (303) verbunden sind.

6. Fahrzeuginternes Lade- und Entladesystem nach Anspruch 5,
wobei der erste Wandler (303) einen ersten Induktor, einen zweiten Induktor, eine erste Schaltröhre, eine zweite Schaltröhre, eine dritte Schaltröhre und eine vierte Schaltröhre umfasst; wobei der erste Anschluss des ersten Wandlers (303) einen ersten Zugangspunkt und einen zweiten Zugangspunkt umfasst, und wobei ein zweiter Anschluss des zweiten Wandlers (304) einen dritten Zugangspunkt und einen vierten Zugangspunkt umfasst,
wobei die erste Schaltröhre und die zweite Schaltröhre in Reihe verbunden sind, um einen ersten Brückenarm zu bilden, wobei die dritte Schaltröhre und die vierte Schaltröhre in Reihe verbunden sind, um einen zweiten Brückenarm zu bilden, und wobei der erste Brückenarm und der zweite Brückenarm parallel miteinander mit dem dritten Zugangspunkt und dem vierten Zugangspunkt verbunden sind, und
wobei der statische Kontakt des ersten Schalters mit dem ersten Zugangspunkt verbunden ist und wobei der erste Zugangspunkt unter Verwendung des ersten Induktors mit einem Mittelpunkt des ersten Brückenarms verbunden ist; wobei der statische Kontakt des zweiten Schalters mit dem zweiten Zugangspunkt verbunden ist und wobei der zweite Zugangspunkt unter Verwendung des zweiten Induktors mit einem Mittelpunkt des zweiten Brückenarms verbunden ist; und wobei der Kathodenanschluss der Niederspannungsbatterieschnittstelle (306) mit dem dritten Zugangspunkt verbunden ist.

7. Fahrzeuginternes Lade- und Entladesystem nach Anspruch 3 oder 5,
wobei das System ferner einen dritten Schalter umfasst, wobei
der Kathodenanschluss der Niederspannungsbatterieschnittstelle (306) unter Verwendung des dritten Schalters geerdet ist.

8. Fahrzeuginternes Lade- und Entladesystem nach einem der Ansprüche 1 bis 7,
wobei der zweite Wandler (304) eine erste Leistungswandlungsschaltung, einen Isolationstransformator und eine zweite Leistungsumwandlungsschaltung umfasst, wobei
die erste Leistungsumwandlungsschaltung ausgelegt ist zum: Umrichten eines eingehenden Gleichstroms in einen Wechselstrom, oder Gleichrichten eines eingehenden Wechselstroms in einen Gleichstrom, gesteuert durch die Steuerung (307);
die zweite Leistungsumwandlungsschaltung ausgelegt ist zum: Gleichrichten eines eingehenden Wechselstroms in einen Gleichstrom oder Umrichten eines eingehenden Gleichstroms in einen Wechselstrom, gesteuert durch die Steuerung (307); und
wobei der Isolationstransformator ausgelegt ist zum: Isolieren und Transformieren eines Wechselstroms eines Eingangsanschlusses zu einem Ausgangsanschluss.

9. Fahrzeuginternes Lade- und Entladesystem nach einem der Ansprüche 1 bis 7,
wobei das System ferner einen ersten Kondensator, einen zweiten Kondensator und einen dritten Kondensator umfasst, wobei
der erste Kondensator parallel zur Niederspannungsbatterieschnittstelle (306) verbunden ist; der zweite Kondensator zwischen dem ersten Wandler (303) und dem zweiten Wandler (304) angeordnet ist und parallel zum ersten Wandler (303) verbunden ist; und der dritte Kondensator parallel zur Hochspannungsbatterieschnittstelle (305) verbunden ist.

10. Fahrzeuginternes Lade- und Entladesteuerungsverfahren, angewendet auf eine Steuerung (307), wobei die Steuerung (307) ausgelegt ist zum Steuern einer fahrzeuginternen Lade- und Entladeschaltung, und wobei die fahrzeuginterne Lade- und Entladeschaltung Folgendes umfasst: eine Wechselstromschnittstelle (301), einen isolierenden Transferschalter (302), einen ersten Wandler (303), einen zweiten Wandler (304), eine Hochspannungsbatterieschnittstelle (305) und eine Niederspannungsbatterieschnittstelle (306); und wobei das Verfahren Folgendes umfasst:
Steuern (1001) des isolierenden Transferschalters (302) zum Schalten in einen ersten leitenden Zustand, sodass die Wechselstromschnittstelle (301) mit der Hochspannungsbatterieschnittstelle (305) leitend verbunden ist unter Verwendung des ersten Wandlers (303) und des zweiten Wandlers (304), die in Reihe verbunden sind; und Steuern des ersten Wandlers (303) zum Arbeiten in einem Leistungsfaktorkorrekturmodus oder einem Invertierungsmodus, und Steuern des zweiten Wandlers (304) zum Arbeiten in einem isolierenden Gleichstrom-Gleichstrom-Umwandlungsmodus; und
Steuern (1002) des isolierenden Transferschalters (302) zum Schalten in einen zweiten leitenden Zustand, sodass die Niederspannungsbatterieschnittstelle (306) mit der Hochspannungsbatterieschnittstelle (305) leitend verbunden ist unter Verwendung des ersten Wandlers (303) und des zweiten Wandlers (304), die in Reihe verbunden sind; und Steuern des ersten Wandlers (303) zum Arbeiten in einem Gleichstrom-Gleichstrom-Umwandlungsmodus, und Steuern des zweiten Wandlers (304) zum Arbeiten in dem isolierenden Gleichstrom-Gleichstrom-Umwandlungsmodus.

11. Fahrzeuginternes Lade- und Entladesteuerungsverfahren nach Anspruch 10,
wobei die Wechselstromschnittstelle (301) mit einem ersten Anschluss des isolierenden Transferschalters (302) verbunden ist, wobei die Niederspannungsbatterieschnittstelle (306) mit einem zweiten Anschluss des isolierenden Transferschalters (302) und einem dritten Anschluss des isolierenden Transferschalters (302) verbunden ist, wobei der erste Wandler (303), der zweite Wandler (304) und die Hochspannungsbatterieschnittstelle (305) sequenziell in Reihe verbunden sind;
wobei das Steuern des isolierenden Transferschalters (302) zum Schalten in einen ersten leitenden Zustand Folgendes umfasst:
Steuern des ersten Anschlusses des isolierenden Transferschalters (302), um mit dem dritten Anschluss des isolierenden Transferschalters (302) leitend verbunden zu sein, sodass der isolierende Transferschalter (302) in den ersten leitenden Zustand schaltet; und
wobei das Steuern des isolierenden Transferschalters (302) zum Schalten in einen zweiten leitenden Zustand Folgendes umfasst:
Steuern des zweiten Anschlusses des isolierenden Transferschalters (302), um mit dem dritten Anschluss des isolierenden Transferschalters (302) leitend verbunden zu sein, sodass der isolierende Transferschalter (302) in den zweiten leitenden Zustand schaltet.

12. Fahrzeuginternes Lade- und Entladesteuerungsverfahren nach Anspruch 11,
wobei der isolierende Transferschalter (302) einen ersten Schalter umfasst, wobei
ein Anschluss der Wechselstromschnittstelle (301) mit einem ersten bewegbaren Kontakt des ersten Schalters verbunden ist und der andere Anschluss der Wechselstromschnittstelle (301) mit einem ersten Anschluss des ersten Wandlers (303) verbunden ist; ein Anodenanschluss der Niederspannungsbatterieschnittstelle (306) mit einem zweiten bewegbaren Kontakt des ersten Schalters verbunden ist, und ein Kathodenanschluss der Niederspannungsbatterieschnittstelle (306) geerdet ist; und wobei ein statischer Kontakt des ersten Schalters mit dem ersten Anschluss des ersten Wandlers (303) verbunden ist;
wobei das Steuern des isolierenden Transferschalters (302) zum Schalten in einen ersten leitenden Zustand Folgendes umfasst:
Steuern des ersten bewegbaren Kontakts des ersten Schalters, um mit dem statischen Kontakt des ersten Schalters leitend verbunden zu sein; und
wobei das Steuern des isolierenden Transferschalters (302) zum Schalten in einen zweiten leitenden Zustand Folgendes umfasst:
Steuern des zweiten bewegbaren Kontakts des ersten Schalters, um mit dem statischen Kontakt des ersten Schalters leitend verbunden zu sein.

13. Fahrzeuginternes Lade- und Entladesteuerungsverfahren nach Anspruch 12,
wobei der erste Wandler (303) einen ersten Induktor, eine erste Schaltröhre, eine zweite Schaltröhre, eine dritte Schaltröhre und eine vierte Schaltröhre umfasst; wobei der erste Anschluss des ersten Wandlers (303) einen ersten Zugangspunkt und einen zweiten Zugangspunkt umfasst; und wobei ein zweiter Anschluss des ersten Wandlers (303) einen dritten Zugangspunkt und einen vierten Zugangspunkt umfasst;
wobei die erste Schaltröhre und die zweite Schaltröhre in Reihe verbunden sind, um einen ersten Brückenarm zu bilden, wobei die dritte Schaltröhre und die vierte Schaltröhre in Reihe verbunden sind, um einen zweiten Brückenarm zu bilden, und wobei der erste Brückenarm und der zweite Brückenarm parallel miteinander mit dem dritten Zugangspunkt und dem vierten Zugangspunkt verbunden sind; und
wobei der statische Kontakt des ersten Schalters mit dem ersten Zugangspunkt verbunden ist und wobei der erste Zugangspunkt unter Verwendung des ersten Induktors mit einem Mittelpunkt des ersten Brückenarms verbunden ist; wobei der andere Anschluss der Wechselstromschnittstelle (301) unter Verwendung des zweiten Zugangspunkts mit einem Mittelpunkt des zweiten Brückenarms verbunden ist; und wobei der Kathodenanschluss der Niederspannungsbatterieschnittstelle (306) mit dem dritten Zugangspunkt verbunden ist;
wobei Steuern des ersten Wandlers (303) zum Arbeiten in einem Leistungsfaktorkorrekturmodus oder einem Invertierungsmodus Folgendes umfasst:
Steuern des Einschaltens und Ausschaltens der ersten Schaltröhre, der zweiten Schaltröhre, der dritten Schaltröhre und der vierten Schaltröhre, wenn der erste bewegbare Kontakt des ersten Schalters mit dem statischen Kontakt des ersten Schalters leitend verbunden ist, sodass der erste Wandler (303) in dem Leistungsfaktorkorrekturmodus oder dem Invertierungsmodus arbeitet; und
wobei Steuern des ersten Wandlers (303) zum Arbeiten in einem Gleichstrom-Gleichstrom-Umwandlungsmodus Folgendes umfasst:
Steuern des Einschaltens und Ausschaltens der ersten Schaltröhre und der zweiten Schaltröhre, wenn der zweite bewegbare Kontakt des ersten Schalters mit dem statischen Kontakt des ersten Schalters leitend verbunden ist, sodass der erste Wandler (303) in einem Gleichstrom-Aufwärtsmodus oder in einem Gleichstrom-Abwärtsmodus arbeitet.

14. Fahrzeuginternes Lade- und Entladesteuerungsverfahren nach Anspruch 12,
wobei der isolierende Transferschalter (302) ferner einen zweiten Schalter umfasst, wobei
ein Anschluss der Wechselstromschnittstelle (301) mit dem ersten bewegbaren Kontakt des ersten Schalters verbunden ist und der andere Anschluss der Wechselstromschnittstelle (301) mit einem ersten bewegbaren Kontakt des zweiten Schalters verbunden ist; wobei der Anodenanschluss der Niederspannungsbatterieschnittstelle (306) mit einem gemeinsamen Punkt verbunden ist, wobei der gemeinsame Punkt ein Verbindungspunkt zwischen dem zweiten bewegbaren Kontakt des ersten Schalters und einem zweiten bewegbaren Kontakt des zweiten Schalters ist; wobei der Kathodenanschluss der Niederspannungsbatterieschnittstelle (306) geerdet ist; und wobei der statische Kontakt des ersten Schalters und ein statischer Kontakt des zweiten Schalters mit dem ersten Anschluss des ersten Wandlers (303) verbunden sind;
wobei das Steuern des isolierenden Transferschalters (302) zum Schalten in einen ersten leitenden Zustand Folgendes umfasst:
Steuern des ersten bewegbaren Kontakts des zweiten Schalters, um mit dem statischen Kontakt des zweiten Schalters leitend verbunden zu sein, und Steuern eines ersten bewegbaren Kontakts eines dritten Schalters, um mit einem statischen Kontakt des dritten Schalters leitend verbunden zu sein; und
wobei das Steuern des isolierenden Transferschalters (302) zum Schalten in einen zweiten leitenden Zustand Folgendes umfasst:
Steuern des zweiten bewegbaren Kontakts des zweiten Schalters, um mit dem statischen Kontakt des zweiten Schalters leitend verbunden zu sein, und Steuern eines zweiten bewegbaren Kontakts des dritten Schalters, um mit dem statischen Kontakt des dritten Schalters leitend verbunden zu sein.

15. Fahrzeuginternes Lade- und Entladesteuerungsverfahren nach Anspruch 14,
wobei der erste Wandler (303) einen ersten Induktor, einen zweiten Induktor, eine erste Schaltröhre, eine zweite Schaltröhre, eine dritte Schaltröhre und eine vierte Schaltröhre umfasst; wobei der erste Anschluss des ersten Wandlers (303) einen ersten Zugangspunkt und einen zweiten Zugangspunkt umfasst; und wobei ein zweiter Anschluss des zweiten Wandlers (304) einen dritten Zugangspunkt und einen vierten Zugangspunkt umfasst;
wobei die erste Schaltröhre und die zweite Schaltröhre in Reihe verbunden sind, um einen ersten Brückenarm zu bilden, wobei die dritte Schaltröhre und die vierte Schaltröhre in Reihe verbunden sind, um einen zweiten Brückenarm zu bilden, und wobei der erste Brückenarm und der zweite Brückenarm parallel miteinander mit dem dritten Zugangspunkt und dem vierten Zugangspunkt verbunden sind; und
wobei der statische Kontakt des ersten Schalters mit dem ersten Zugangspunkt verbunden ist und wobei der erste Zugangspunkt unter Verwendung des ersten Induktors mit einem Mittelpunkt des ersten Brückenarms verbunden ist; wobei der statische Kontakt des zweiten Schalters mit dem zweiten Zugangspunkt verbunden ist und wobei der zweite Zugangspunkt unter Verwendung des zweiten Induktors mit einem Mittelpunkt des zweiten Brückenarms verbunden ist; und wobei der Kathodenanschluss der Niederspannungsbatterieschnittstelle (306) mit dem dritten Zugangspunkt verbunden ist;
wobei Steuern des ersten Wandlers (303) zum Arbeiten in einem Leistungsfaktorkorrekturmodus oder einem Invertierungsmodus Folgendes umfasst:
Steuern des Einschaltens und Ausschaltens der ersten Schaltröhre, der zweiten Schaltröhre, der dritten Schaltröhre und der vierten Schaltröhre, wenn der erste bewegbare Kontakt des ersten Schalters mit dem statischen Kontakt des ersten Schalters leitend verbunden ist, und wenn der erste bewegbare Kontakt des zweiten Schalters mit dem statischen Kontakt des zweiten Schalters leitend verbunden ist, sodass der erste Wandler (303) in dem Leistungsfaktorkorrekturmodus oder dem Invertierungsmodus arbeitet; und
wobei Steuern des ersten Wandlers (303) zum Arbeiten in einem Gleichstrom-Gleichstrom-Umwandlungsmodus Folgendes umfasst:
Steuern des Einschaltens und Ausschaltens der ersten Schaltröhre und der zweiten Schaltröhre in einem ersten parallelen Zweig und Steuern des Einschaltens und Ausschaltens der dritten Schaltröhre und der vierten Schaltröhre in einem zweiten parallelen Zweig, wenn der zweite bewegbare Kontakt des ersten Schalters mit dem statischen Kontakt des ersten Schalters leitend verbunden ist und wenn der zweite bewegbare Kontakt des zweiten Schalters mit dem statischen Kontakt des zweiten Schalters leitend verbunden ist, sodass der erste Wandler (303) in einem Gleichstrom-Aufwärtsmodus oder einem Gleichstrom-Abwärtsmodus arbeitet, wobei der erste parallele Zweig den ersten Induktor, die erste Schaltröhre und die zweite Schaltröhre umfasst; und wobei der zweite parallele Zweig den zweiten Induktor, die dritte Schaltröhre und die vierte Schaltröhre umfasst.

16. Fahrzeuginternes Lade- und Entladesteuerungsverfahren nach Anspruch 12 oder 14,
wobei die fahrzeuginterne Lade- und Entladeschaltung ferner den dritten Schalter umfasst und wobei der Kathodenanschluss der Niederspannungsbatterieschnittstelle (306) unter Verwendung des dritten Schalters geerdet ist;
wobei das Steuern des isolierenden Transferschalters (302) zum Schalten in einen ersten leitenden Zustand Folgendes umfasst:
Steuern des dritten Schalters, um getrennt zu sein, wenn der erste bewegbare Kontakt des ersten Schalters gesteuert wird, um mit dem statischen Kontakt des ersten Schalters leitend verbunden zu sein; oder wenn gleichzeitig der erste bewegbare Kontakt des ersten Schalters gesteuert wird, um mit dem statischen Kontakt des ersten Schalters leitend verbunden zu sein, und der erste bewegbare Kontakt des zweiten Schalters gesteuert wird, um mit dem statischen Kontakt des zweiten Schalters leitend verbunden zu sein; und
wobei das Steuern des isolierenden Transferschalters (302) zum Schalten in einen zweiten leitenden Zustand Folgendes umfasst:
Steuern des dritten Schalters, um geschlossen zu sein, wenn der zweite bewegbare Kontakt des ersten Schalters gesteuert wird, um mit dem statischen Kontakt des ersten Schalters leitend verbunden zu sein; oder wenn gleichzeitig der zweite bewegbare Kontakt des ersten Schalters gesteuert wird, um mit dem statischen Kontakt des ersten Schalters leitend verbunden zu sein, und der zweite bewegbare Kontakt des zweiten Schalters gesteuert wird, um mit dem statischen Kontakt des zweiten Schalters leitend verbunden zu sein.

## Revendications

1. Système de charge et de décharge embarqué, le système comprenant : une interface de courant alternatif (301), un commutateur de transfert isolant (302), un premier convertisseur (303), un deuxième convertisseur (304), une interface de batterie haute tension (305), une interface de batterie basse tension (306) et un dispositif de commande (307),
le dispositif de commande (307) étant configuré pour : commander au commutateur de transfert isolant (302) de commuter vers un premier état conducteur, de sorte que l'interface de courant alternatif (301) est conduite avec l'interface de batterie haute tension (305) en utilisant le premier convertisseur (303) et le deuxième convertisseur (304) qui sont connectés en série ; et commander au premier convertisseur (303) de fonctionner dans un mode de correction de facteur de puissance ou un mode d'inversion, et commander au deuxième convertisseur (304) de fonctionner dans un mode de conversion à isolation de courant continu-courant continu ; et
le dispositif de commande (307) étant configuré en outre pour : commander au commutateur de transfert isolant (302) de commuter vers un deuxième état conducteur, de sorte que l'interface de batterie basse tension (306) est conduite avec l'interface de batterie haute tension (305) en utilisant le premier convertisseur (303) et le deuxième convertisseur (304) qui sont connectés en série ; et commander au premier convertisseur (303) de fonctionner dans un mode de conversion de courant continu-courant continu, et commander au deuxième convertisseur (304) de fonctionner dans le mode de conversion à isolation de courant continu-courant continu.

2. Système de charge et de décharge embarqué selon la revendication 1,
l'interface de courant alternatif (301) étant connectée à une première borne du commutateur de transfert isolant (302), l'interface de batterie basse tension (306) étant connectée à une deuxième borne du commutateur de transfert isolant (302), et une troisième borne du commutateur de transfert isolant (302), le premier convertisseur (303), le deuxième convertisseur (304) et l'interface de batterie haute tension (305) étant connectés séquentiellement en série.

3. Système de charge et de décharge embarqué selon la revendication 2,
le commutateur de transfert isolant (302) comprenant un premier commutateur,
une borne de l'interface de courant alternatif (301) étant connectée à un premier contact mobile du premier commutateur, et l'autre borne de l'interface de courant alternatif (301) étant connectée à un premier port du premier convertisseur (303) ; un port d'anode de l'interface de batterie basse tension (306) étant connecté à un deuxième contact mobile du premier commutateur, et un port de cathode de l'interface de batterie basse tension (306) étant mis à la terre ; et un contact statique du premier commutateur étant connecté au premier port du premier convertisseur (303).

4. Système de charge et de décharge embarqué selon la revendication 3,
le premier convertisseur (303) comprenant un premier inducteur, un premier tube de commutation, un deuxième tube de commutation, un troisième tube de commutation et un quatrième tube de commutation ; le premier port du premier convertisseur (303) comprenant un premier point d'accès et un deuxième point d'accès ; et un deuxième port du premier convertisseur (303) comprenant un troisième point d'accès et un quatrième point d'accès ;
le premier tube de commutation et le deuxième tube de commutation étant connectés en série pour former une première branche de pont, le troisième tube de commutation et le quatrième tube de commutation étant connectés en série pour former une deuxième branche de pont, et la première branche de pont et la deuxième branche de pont étant connectées en parallèle l'une à l'autre au troisième point d'accès et au quatrième point d'accès ; et
le contact statique du premier commutateur étant connecté au premier point d'accès, le premier point d'accès étant connecté à un point médian de la première branche de pont en utilisant le premier inducteur ; l'autre borne de l'interface de courant alternatif (301) étant connectée à un point médian de la deuxième branche de pont en utilisant le deuxième point d'accès ; et le port de cathode de l'interface de batterie basse tension (306) étant connecté au troisième point d'accès.

5. Système de charge et de décharge embarqué selon la revendication 3,
le commutateur de transfert isolant (302) comprenant en outre un deuxième commutateur,
une borne de l'interface de courant alternatif (301) étant connectée au premier contact mobile du premier commutateur, et l'autre borne de l'interface de courant alternatif (301) étant connectée à un premier contact mobile du deuxième commutateur ; le port d'anode de l'interface de batterie basse tension (306) étant connecté à un point commun, le point commun étant un point de connexion entre le deuxième contact mobile du premier commutateur et un deuxième contact mobile du deuxième commutateur ; le port de cathode de l'interface de batterie basse tension (306) étant mis à la terre ; et le contact statique du premier commutateur et un contact statique du deuxième commutateur étant connectés au premier port du premier convertisseur (303).

6. Système de charge et de décharge embarqué selon la revendication 5,
le premier convertisseur (303) comprenant un premier inducteur, un deuxième inducteur, un premier tube de commutation, un deuxième tube de commutation, un troisième tube de commutation et un quatrième tube de commutation ; le premier port du premier convertisseur (303) comprenant un premier point d'accès et un deuxième point d'accès ; et un deuxième port du deuxième convertisseur (304) comprenant un troisième point d'accès et un quatrième point d'accès ;
le premier tube de commutation et le deuxième tube de commutation étant connectés en série pour former une première branche de pont, le troisième tube de commutation et le quatrième tube de commutation étant connectés en série pour former une deuxième branche de pont, et la première branche de pont et la deuxième branche de pont étant connectées en parallèle l'une à l'autre au troisième point d'accès et au quatrième point d'accès ; et
le contact statique du premier commutateur étant connecté au premier point d'accès, et le premier point d'accès étant connecté à un point médian de la première branche de pont en utilisant le premier inducteur ; le contact statique du deuxième commutateur étant connecté au deuxième point d'accès, et le deuxième point d'accès étant connecté à un point médian de la deuxième branche de pont en utilisant le deuxième inducteur ; et le port de cathode de l'interface de batterie basse tension (306) étant connecté au troisième point d'accès.

7. Système de charge et de décharge embarqué selon la revendication 3 ou 5,
le système comprenant en outre un troisième commutateur,
le port de cathode de l'interface de batterie basse tension (306) étant mis à la terre en utilisant le troisième commutateur.

8. Système de charge et de décharge embarqué selon l'une quelconque des revendications 1 à 7,
le deuxième convertisseur (304) comprenant un premier circuit de conversion de puissance, un transformateur d'isolation et un deuxième circuit de conversion de puissance,
le premier circuit de conversion de puissance étant configuré pour : inverser un courant continu d'entrée en courant alternatif, ou rectifier un courant alternatif d'entrée en courant continu sous le contrôle du dispositif de commande (307) ;
le deuxième circuit de conversion de puissance étant configuré pour : rectifier un courant alternatif d'entrée en courant continu, ou inverser un courant continu d'entrée en courant alternatif sous le contrôle du dispositif de commande (307) ; et
le transformateur d'isolation étant configuré pour : isoler et transformer un courant alternatif d'une borne d'entrée en une borne de sortie.

9. Système de charge et de décharge embarqué selon l'une quelconque des revendications 1 à 7,
le système comprenant en outre un premier condensateur, un deuxième condensateur et un troisième condensateur,
le premier condensateur étant connecté en parallèle à l'interface de batterie basse tension (306) ; le deuxième condensateur étant disposé entre le premier convertisseur (303) et le deuxième convertisseur (304), et étant connecté en parallèle au premier convertisseur (303) ; et le troisième condensateur étant connecté en parallèle à l'interface de batterie haute tension (305).

10. Procédé de commande de charge et de décharge embarqué, appliqué à un dispositif de commande (307), le dispositif de commande (307) étant configuré pour commander un circuit de charge et de décharge embarqué, et le circuit de charge et de décharge embarqué comprenant : une interface de courant alternatif (301), un commutateur de transfert isolant (302), un premier convertisseur (303), un deuxième convertisseur (304), une interface de batterie haute tension (305), et une interface de batterie basse tension (306) ; et le procédé comprenant :
la commande (1001) au commutateur de transfert isolant (302) de commuter vers un premier état conducteur, de sorte que l'interface de courant alternatif (301) est conduite avec l'interface de batterie haute tension (305) en utilisant le premier convertisseur (303) et le deuxième convertisseur (304) qui sont connectés en série ; et la commande au premier convertisseur (303) de fonctionner dans un mode de correction de facteur de puissance ou un mode d'inversion, et la commande au deuxième convertisseur (304) de fonctionner dans un mode de conversion à isolation de courant continu-courant continu ; et
la commande (1002) au commutateur de transfert isolant (302) de commuter vers un deuxième état conducteur, de sorte que l'interface de batterie basse tension (306) est conduite avec l'interface de batterie haute tension (305) en utilisant le premier convertisseur (303) et le deuxième convertisseur (304) qui sont connectés en série ; et la commande au premier convertisseur (303) de fonctionner dans un mode de conversion de courant continu-courant continu, et la commande au deuxième convertisseur (304) de fonctionner dans le mode de conversion à isolation de courant continu-courant continu.

11. Procédé de commande de charge et de décharge embarqué selon la revendication 10,
l'interface de courant alternatif (301) étant connectée à une première borne du commutateur de transfert isolant (302), l'interface de batterie basse tension (306) étant connectée à une deuxième borne du commutateur de transfert isolant (302), et un troisième borne du commutateur de transfert isolant (302), le premier convertisseur (303), le deuxième convertisseur (304) et l'interface de batterie haute tension (305) étant connectés séquentiellement en série ;
la commande au commutateur de transfert isolant (302) de commuter vers un premier état conducteur comprenant :
la commande à la première borne du commutateur de transfert isolant (302) d'être conduite avec la troisième borne du commutateur de transfert isolant (302), de sorte que le commutateur de transfert isolant (302) commute vers le premier état conducteur ; et
la commande au commutateur de transfert isolant (302) de commuter vers un deuxième état conducteur comprenant :
la commande à la deuxième borne du commutateur de transfert isolant (302) d'être conduite avec la troisième borne du commutateur de transfert isolant (302), de sorte que le commutateur de transfert isolant (302) commute vers le deuxième état conducteur.

12. Procédé de commande de charge et de décharge embarqué selon la revendication 11, le commutateur de transfert isolant (302) comprenant un premier commutateur,
une borne de l'interface de courant alternatif (301) étant connectée à un premier contact mobile du premier commutateur, et l'autre borne de l'interface de courant alternatif (301) étant connectée à un premier port du premier convertisseur (303) ; un port d'anode de l'interface de batterie basse tension (306) étant connecté à un deuxième contact mobile du premier commutateur, et un port de cathode de l'interface de batterie basse tension (306) étant mis à la terre ; et un contact statique du premier commutateur étant connecté au premier port du premier convertisseur (303) ;
la commande au commutateur de transfert isolant (302) de commuter vers un premier état conducteur comprenant :
la commande au premier contact mobile du premier commutateur d'être conduit avec le contact statique du premier commutateur ; et
la commande au commutateur de transfert isolant (302) de commuter vers un deuxième état conducteur comprenant :
la commande au deuxième contact mobile du premier commutateur d'être conduit avec le contact statique du premier commutateur.

13. Procédé de commande de charge et de décharge embarqué selon la revendication 12, le premier convertisseur (303) comprenant un premier inducteur, un premier tube de commutation, un deuxième tube de commutation, un troisième tube de commutation et un quatrième tube de commutation ; le premier port du premier convertisseur (303) comprenant un premier point d'accès et un deuxième point d'accès ; et un deuxième port du premier convertisseur (303) comprenant un troisième point d'accès et un quatrième point d'accès ;
le premier tube de commutation et le deuxième tube de commutation étant connectés en série pour former une première branche de pont, le troisième tube de commutation et le quatrième tube de commutation étant connectés en série pour former une deuxième branche de pont, et la première branche de pont et la deuxième branche de pont étant connectées en parallèle l'une à l'autre au troisième point d'accès et au quatrième point d'accès ; et
le contact statique du premier commutateur étant connecté au premier point d'accès, et le premier point d'accès étant connecté à un point médian de la première branche de pont en utilisant le premier inducteur ; l'autre borne de l'interface de courant alternatif (301) étant connectée à un point médian de la deuxième branche de pont en utilisant le deuxième point d'accès ; et le port de cathode de l'interface de batterie basse tension (306) étant connecté au troisième point d'accès ;
la commande au premier convertisseur (303) de fonctionner dans un mode de correction de facteur de puissance ou un mode d'inversion comprenant :
la commande de la mise en tension et de la mise hors tension du premier tube de commutation, du deuxième tube de commutation, du troisième tube de commutation et du quatrième tube de commutation lorsque le premier contact mobile du premier commutateur est conduit avec le contact statique du premier commutateur, de sorte que le premier convertisseur (303) fonctionne dans le mode de correction de facteur de puissance ou le mode d'inversion ; et
la commande au premier convertisseur (303) de fonctionner dans un mode de conversion de courant continu-courant continu comprenant :
la commande de la mise en tension et de la mise hors tension du premier tube de commutation et du deuxième tube de commutation lorsque le deuxième contact mobile du premier commutateur est conduit avec le contact statique du premier commutateur, de sorte que le premier convertisseur (303) fonctionne dans un mode d'amplification de courant continu ou un mode abaisseur de courant continu.

14. Procédé de commande de charge et de décharge embarqué selon la revendication 12, le commutateur de transfert isolant (302) comprenant en outre un deuxième commutateur,
une borne de l'interface de courant alternatif (301) étant connectée au premier contact mobile du premier commutateur, et l'autre borne de l'interface de courant alternatif (301) étant connectée à un premier contact mobile du deuxième commutateur ; le port d'anode de l'interface de batterie basse tension (306) étant connecté à un point commun, le point commun étant un point de connexion entre le deuxième contact mobile du premier commutateur et un deuxième contact mobile du deuxième commutateur ; le port de cathode de l'interface de batterie basse tension (306) étant mis à la terre ; et le contact statique du premier commutateur et un contact statique du deuxième commutateur étant connectés au premier port du premier convertisseur (303) ;
la commande au commutateur de transfert isolant (302) de commuter vers un premier état conducteur comprenant :
la commande au premier contact mobile du deuxième commutateur d'être conduit avec le contact statique du deuxième commutateur, et la commande à un premier contact mobile d'un troisième commutateur d'être conduit avec un contact statique du troisième commutateur ; et
la commande au commutateur de transfert isolant (302) de commuter vers un deuxième état conducteur comprenant :
la commande au deuxième contact mobile du deuxième commutateur d'être conduit avec le contact statique du deuxième commutateur, et la commande au deuxième contact mobile du troisième commutateur d'être conduit avec le contact statique du troisième commutateur.

15. Procédé de commande de charge et de décharge embarqué selon la revendication 14, le premier convertisseur (303) comprenant un premier inducteur, un deuxième inducteur, un premier tube de commutation, un deuxième tube de commutation, un troisième tube de commutation et un quatrième tube de commutation ; le premier port du premier convertisseur (303) comprenant un premier point d'accès et un deuxième point d'accès ; et un deuxième port du deuxième convertisseur (304) comprenant un troisième point d'accès et un quatrième point d'accès ;
le premier tube de commutation et le deuxième tube de commutation étant connectés en série pour former une première branche de pont, le troisième tube de commutation et le quatrième tube de commutation étant connectés en série pour former une deuxième branche de pont, et la première branche de pont et la deuxième branche de pont étant connectées en parallèle l'une à l'autre au troisième point d'accès et au quatrième point d'accès ; et
le contact statique du premier commutateur étant connecté au premier point d'accès, et le premier point d'accès étant connecté à un point médian de la première branche de pont en utilisant le premier inducteur ; le contact statique du deuxième commutateur étant connecté au deuxième point d'accès, et le deuxième point d'accès étant connecté à un point médian de la deuxième branche de pont en utilisant le deuxième inducteur ; et le port de cathode de l'interface de batterie basse tension (306) étant connecté au troisième point d'accès ;
la commande au premier convertisseur (303) de fonctionner dans un mode de correction de facteur de puissance ou un mode d'inversion comprenant :
la commande de la mise en tension et de la mise hors tension du premier tube de commutation, du deuxième tube de commutation, du troisième tube de commutation et du quatrième tube de commutation lorsque le premier contact mobile du premier commutateur est conduit avec le contact statique du premier commutateur, et lorsque le premier contact mobile du deuxième commutateur est conduit avec le contact statique du deuxième commutateur, de sorte que le premier convertisseur (303) fonctionne dans le mode de correction de facteur de puissance ou le mode d'inversion ; et
la commande au premier convertisseur (303) de fonctionner dans un mode de conversion de courant continu-courant continu comprenant :
la commande de la mise en tension et de la mise hors tension du premier tube de commutation et du deuxième tube de commutation dans une première branche parallèle et la commande de la mise en tension et de la mise hors tension du troisième tube de commutation et du quatrième tube de commutation dans une deuxième branche parallèle lorsque le deuxième contact mobile du premier commutateur est conduit avec le contact statique du premier commutateur et lorsque le deuxième contact mobile du deuxième commutateur est conduit avec le contact statique du deuxième commutateur, de sorte que le premier convertisseur (303) fonctionne dans un mode d'amplification de courant continu ou un mode abaisseur de courant continu, la première branche parallèle comprenant le premier inducteur, le premier tube de commutation et le deuxième tube de commutation ; et la deuxième branche parallèle comprenant le deuxième inducteur, le troisième tube de commutation et le quatrième tube de commutation.

16. Procédé de commande de charge et de décharge embarqué selon la revendication 12 ou 14,
le circuit de charge et de décharge embarqué comprenant en outre le troisième commutateur, et le port de cathode de l'interface de batterie basse tension (306) étant mis à la terre en utilisant le troisième commutateur ;
la commande au commutateur de transfert isolant (302) de commuter vers un premier état conducteur comprenant :
la commande au troisième commutateur d'être déconnecté lors de la commande au premier contact mobile du premier commutateur d'être conduit avec le contact statique du premier commutateur ou la commande simultanée au premier contact mobile du premier commutateur d'être conduit avec le contact statique du premier commutateur et la commande au premier contact mobile du deuxième commutateur d'être conduit avec le contact statique du deuxième commutateur ; et
la commande au commutateur de transfert isolant (302) de commuter vers un deuxième état conducteur comprenant :
la commande au troisième commutateur d'être fermé lors de la commande au deuxième contact mobile du premier commutateur d'être conduit avec le contact statique du premier commutateur ou la commande simultanée au deuxième contact mobile du premier commutateur d'être conduit avec le contact statique du premier commutateur et la commande au deuxième contact mobile du deuxième commutateur d'être conduit avec le contact statique du deuxième commutateur.
